# EUROPEAN PATENT SPECIFICATION

(11) **EP 3 607 768 B1**
(45) Date of publication and mention of the grant of the patent: **23.02.2022**
(21) Application number: 18717706.8
(22) Date of filing: 03.04.2018
(51) Int. Cl.: H04W 24/10

(54) **METHOD OF LIMITING NEEDED BEAM MEASUREMENT IN CELL RE-SELECTION**
VERFAHREN ZUR BEGRENZUNG DER BENÖTIGTEN STRAHLMESSUNG BEI DER ZELLNEUAUSWAHL
PROCÉDÉ DE LIMITATION DE LA MESURE DE FAISCEAU NÉCESSAIRE DANS UNE RESÉLECTION DE CELLULE

(30) Priority: 03.04.2017 US 201762480873 P
(43) Date of publication of application: 12.02.2020
(73) Proprietor: Telefonaktiebolaget LM Ericsson (publ), 164 83 Stockholm (SE)
(72) Inventor: RUNE, Johan, SE-181 29 Lidingö (SE); DA SILVA, Icaro L. J., SE-170 77 Solna (SE); GUNNARSSON, Fredrik, SE-587 50 Linköping (SE); RAMACHANDRA, Pradeepa, SE-589 29 Linköping (SE); SHEN, Wei, SE-582 16 Linköping (SE)
(74) Representative: Ericsson
(86) International application number: PCT/IB2018/052301
(87) International publication number: WO 2018/185662

(56) References cited:
- WO-A1-2015/080648
- US-A1- 2005 176 469
- US-A1- 2016 150 435

## Description

### TECHNICAL FIELD

The present disclosure generally relates to wireless communications, wireless communication networks, and wireless communications nodes and devices.

### INTRODUCTION

In Long-Term Evolution (LTE), a User Equipment (UE) in RRC_IDLE state (where RRC means Radio Resource Control) shall measure the Reference Signal Received Power (RSRP) and Reference Signal Received Quality (RSRQ) level of the serving cell and evaluate the cell selection criterion for the serving cell at least every Discontinuous Reception (DRX) cycle. If the cell selection criterion is fulfilled, the cell is considered as a suitable cell for camping. Otherwise, the UE will search for (and select if available) another suitable cell to camp on. The UE shall also measure and evaluate the non-serving cells with the same methods of the cell quality derivation and cell selection criterion as that in the intra-cell measurement and evaluation. When the UE switches from camping on one cell to camping on another cell, this is known as cell re-selection.

In New Radio (NR), a Synchronization Signal (SS) block consists of at least two time-division multiplexed components: Primary Synchronization Signal (PSS) and Secondary Synchronization Signal (SSS). SSS is used for downlink based Radio Resource Management (RRM) measurement for Layer 3 mobility in RRC_IDLE and RRC INACTIVE mode.

The PSS+SSS are transmitted together with a broadcast channel denoted Physical Broadcast Channel (PBCH), which carries a small part of the system information, sometimes referred to as the Master Information Block (MIB). The PSS+SSS+PBCH structure is denoted SS Block. The SS Block is broadcast in a cell to provide crucial information for UEs, e.g. UEs in RRC IDLE or RRC INACTIVE state.

SS Block transmissions may be grouped into a SS Burst. The SS Block transmissions in a SS Burst may e.g. be the SS Block transmissions of a beam sweep, in the case where transmission of multiple beamformed SS Block transmissions (each covering a different part of the cell coverage area) are used to reach the entire cell coverage area. Another alternative is that the SS Block transmissions in a SS Burst use wide, e.g. sector-wide, or even omnidirectional, beams and the UE can soft-combine the SS Block transmissions to accumulate energy to improve the detection/decoding/reception possibilities. In this case each SS Block transmission, in principle, covers the entire cell coverage area, but the signal power reaching a UE at the cell edge is not expected to be high enough to enable correct decoding of the SS Block unless the UE soft-combines multiple such SS Block transmissions.

Furthermore, multiple SS Bursts may be grouped in a SS Burst Set. This may e.g. be done in the case when the maximum allowed - or the maximum desired - number of SS Block transmissions in a single SS Burst is not enough to form a complete beam sweep covering the entire cell area. Then, as one example of SS Burst Set usage, the SS Block beams of a complete beam sweep may be divided into multiple SS Bursts forming a SS Burst Set.

A potential additional component of the SS Block, which 3rd Generation Partnership Project (3GPP) considers introducing (currently for further study in Radio Access Network (RAN)1) is a Tertiary Synchronization Signal (TSS), which will provide information to aid the UE determine the symbol number in a subframe, the subframe border and/or possibly the transmission number of the SS Block within a SS Burst or SS Burst Set.

From an RRC_IDLE or RRC_INACTIVE UE perspective in the cell re-selection procedure, a camping UE typically needs to periodically perform beam measurement and evaluation of the serving cell, namely intra-cell measurement and evaluation; besides, the UE also needs to periodically perform beam measurement and evaluation on both of the serving cell and non-serving cells, namely inter-cell measurement and evaluation. According to the 3GPP agreement, the cell quality for the cell re-selection is derived from N best beams where the value of N can be configured to 1 or more than 1.

US 2016/150435 A1 discloses a method including acquiring transmission beam specific, measurement information of a base station (BS) and measuring a reference signal (RS) transmitted through transmission beams of the BS according to the transmission beam specific, measurement information. The measurement information on each transmission beam is determined according to at least one of an elevation angle of the corresponding transmission beam, an azimuth of the corresponding transmission beam, a handover urgency, information on a handover failure, and information on a radio link failure (RLF). A mobile station (MS) may perform a measurement report or a handover process according to a result of the measurement.

### SUMMARY

There currently exists certain problem(s).

For example, deriving the cell quality from the N best beams means that a camping UE has to always, e.g. continuously, periodically monitor and search for all of the beams of the serving cell and non-serving cells to measure on.

Assuming that a UE performs the intra-cell quality measurement and evaluation at least every T_{measure,intra-cell} and T_{evaluate,intra-cell} (T_{measure,intra-cell} <= T_{evaluate,intra-cell}) respectively; and assuming that the UE performs the inter-cell quality measurement and evaluation at least every T_{measure,inter-cell} and Tevaluate,inter-cell (T_{measure,inter-cell} > T_{measure,intra-cell}, T_{measure,inter-cell} <T_{evaluate,inter-cell}) respectively, in order to derive the cell quality from the N best beams, the UE has to monitor and search for all of the beams of SS blocks from its serving cell on each measurement occasion of "T_{measure,intra-cell}. Moreover, the UE has to monitor and search for all of the beams from the non-serving cells on each measurement occasion of T_{measure,inter-cell}.

Deriving the cell quality from the N best beams is not an energy-efficient way for intra-cell measurement and evaluation for an RRC_IDLE or RRC_INACTIVE UE, which is expected to consume low energy.

Further, there are potential inefficiency of monitoring and measuring on beam swept signals, such as SS Block transmissions. Means for optimized monitoring of a certain beam in a beam sweep may be beneficial, but do not provide strategies for how to identify the best beam and what to do if the best beam changes or deteriorates. Certain aspects of the present disclosure and embodiments may provide solutions to these or other problems.

There is provided a method for limiting beam measurements by a User Equipment (UE) during an occasion of radio channel quality measurement. The method comprises selecting a group of beams and gradually evaluating beams of the group of beams. Gradually evaluating beams includes obtaining a measurement for at least one beam, comparing the measurement for the at least one beam with a criterion, and upon determination that the measurement for the at least one beam fulfills the criterion, aborting evaluating further beams of the group of beams, thereby limiting beam measurements by the UE.

The method may further comprise, previous to gradually evaluating, opening a measurement window. Aborting evaluating may further comprise closing the measurement window. The method may further comprise closing the measurement window during periods without beam transmissions.

The UE may be in RRC IDLE state or the RRC_INACTIVE state and the occasion of radio channel quality measurement may be an occasion of intra-cell Radio Resource Management (RRM) measurement.

The selecting may further comprise selecting the group of beams based on a default selection of beams for use for a first occasion of radio channel quality measurement or selecting a complete beam sweep.

The selecting may further comprise selecting the group of beams based on prior knowledge of at least one beam previously determined as fulfilling the criterion and the prior knowledge may be used for selecting the group of beams by selecting a target subset of beams.

The selecting may further comprise selecting a single Synchronization Signal (SS) Block, an SS Burst, an SS Burst Set or a subset of consecutive transmissions of Synchronization Signals, SS Blocks, SS Bursts or SS Burst Sets.

The obtaining may further comprise measuring any one of a Reference Signal Received Power (RSRP), a Reference Signal Received Quality (RSRQ), a Signal to Noise Ratio (SNR) or a Signal to Interference and Noise Ratio (SINR) of any one of, or of any combination of, Synchronization Signal (SS) including: a Primary Synchronization Signal (SS) (PSS), a Secondary Synchronization Signal (SSS), a Tertiary Synchronization Signal (TSS), a Channel State Information (CSI) Reference Signal (RS) (CSI-RS) or a Demodulation Reference Signal (DMRS).

The comparing may further comprise comparing the measurement for the at least one beam with a selection threshold and the determination that the measurement for the at least one beam fulfills the criterion may comprise determining that the measurement for the at least one beam is greater than or equal to the selection threshold.

The selection threshold may be a Synchronization Signal (SS) selection threshold and the SS selection threshold may be configured by the network and may be obtained by the UE or may be derived by the UE based on a parameter configured by the network.

The SS selection threshold may comprise a set of values configured for individual SS Blocks depending on Random Access Channel (RACH) configurations, a set of values configured for each SS Burst or a common value configured for all Downlink (DL) SS Blocks.

There is provided a User Equipment (UE) operative to limit beam measurements comprising processing circuitry and a memory, the memory containing instructions executable by the processing circuitry whereby the UE is operative to select a group of beams and gradually evaluate beams of the group of beams. Gradually evaluate the group of beams includes to: obtain a measurement for at least one beam, compare the measurement for the at least one beam with a criterion, and upon determination that the measurement for the at least one beam fulfills the criterion, abort evaluating further beams of the group of beams, thereby limiting beam measurements by the UE.

The UE may further be operative to open a measurement window and to close the measurement window after aborting evaluating further beams.

The UE may further be operative to close the measurement window during periods without beam transmissions.

The UE may be in RRC_IDLE state or the RRC_INACTIVE state and the occasion of radio channel quality measurement may be an occasion of intra-cell Radio Resource Management (RRM) measurement.

The UE may further be operative to select the group of beams based on a default selection of beams for use for a first occasion of radio channel quality measurement or to select a complete beam sweep.

The UE may further be operative to select the group of beams based on prior knowledge of at least one beam previously determined as fulfilling the criterion and the UE may further be operative to use the prior knowledge for selecting the group of beams by selecting a target subset of beams.

The UE may further be operative to select a single Synchronization Signal (SS) Block, an SS Burst, an SS Burst Set or a subset of consecutive transmissions of Synchronization Signals, SS Blocks, SS Bursts or SS Burst Sets.

The UE may further be operative to measure any one of a Reference Signal Received Power (RSRP), a Reference Signal Received Quality (RSRQ), a Signal to Noise Ratio (SNR) or a Signal to Interference and Noise Ratio (SINR) of any one of, or of any combination of, Synchronization Signal (SS) including: a Primary Synchronization Signal (SS) (PSS), a Secondary Synchronization Signal (SSS), a Tertiary Synchronization Signal (TSS), a Channel State Information (CSI) Reference Signal (RS) (CSI-RS) or a Demodulation Reference Signal (DMRS).

The UE may further be operative to compare the measurement for the at least one beam with a selection threshold and to determine that the measurement for the at least one beam is greater than or equal to the selection threshold.

The selection threshold may be a Synchronization Signal (SS) selection threshold and the SS selection threshold may be configured by the network and may be obtained by the UE or may be derived by the UE based on a parameter configured by the network. The SS selection threshold may comprise a set of values configured for individual SS Blocks depending on Random Access Channel (RACH) configurations, a set of values configured for each SS Burst or a common value configured for all Downlink (DL) SS Blocks.

With the methods described herein, a camping UE may only need to open a limited measurement window to perform the monitoring, search and beam measurement(s) when performing intra-cell RRM measurement(s) and evaluation for NR. Therefore, it optimizes the needed beam measurement(s), in turn, to conserve the energy of the UE in RRC_IDLE or RRC_INACTIVE state.

It is to be noted that any feature of any of the embodiments disclosed herein may be applied to any other embodiment, wherever appropriate. Likewise, any advantage of any of the embodiments may apply to the other embodiments, and vice versa. Certain embodiments may have some, or none of the above advantages. Other advantages will be apparent to persons of ordinary skill in the art. Other objectives, features and advantages of the enclosed embodiments will be apparent from the following description.

Generally, all terms used herein are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

### BRIEF DESCRIPTION OF THE DRAWINGS

Figure 1 is a flowchart of a method according to an embodiment.
Figure 2 illustrates UE measurement and evaluation at different occasions according to an embodiment.
Figure 3 illustrates UE measurement and evaluation at different occasions according to an embodiment.
Figure 4 illustrates UE measurement and evaluation at different occasions according to an embodiment.
Figure 5 illustrates UE measurement and evaluation at different occasions according to an embodiment.
Figure 6a is a flowchart of a method according to an embodiment.
Figure 6b is a flowchart of a method according to an embodiment.
Figure 7 is a schematic illustration of a wireless network according to an embodiment.
Figure 8 is a schematic illustration of a user equipment according to an embodiment.
Figure 9 is a schematic illustration of a wireless device according to an embodiment.
Figure 10 is a schematic illustration of a network node according to an embodiment.
Figure 11 illustrates a virtualization environment in which functions according to some embodiment(s) may be implemented.

### DETAILED DESCRIPTION

Various features and embodiments will now be described with reference to the figures to fully convey the scope of the disclosure to those skilled in the art.

Many aspects will be described in terms of sequences of actions or functions. It should be recognized that in some embodiments, some functions or actions could be performed by specialized circuits, by program instructions being executed by one or more processors, or by a combination of both.

Further, some embodiments can be partially or completely embodied in the form of computer readable carrier or carrier wave containing an appropriate set of computer instructions that would cause a processor to carry out the techniques described herein.

In some alternate embodiments, the functions/actions may occur out of the order noted in the sequence of actions or simultaneously. Furthermore, in some illustrations, some blocks, functions or actions may be optional and may or may not be executed; these are generally illustrated with dashed lines.

The following description generally concerns a camping User Equipment (UE) in RRC_IDLE or RRC_INACTIVE, which monitors, searches and measures a limited number of beams, instead of monitoring, searching and measuring all of the beams of the serving cell, during each occasion of intra-cell Radio Resource Management (RRM) measurement. In order to achieve this, a Synchronization Signal (SS) target selection criterion is proposed and the UE terminate the measurement event for as long as the criterion is fulfilled during each measurement occasion.

The UE is provided with a configuration for gradual evaluation of a group of beams. If an evaluation criterion is met after a subset of the beams of the group have been evaluated, the UE aborts the remaining measurements of the group.

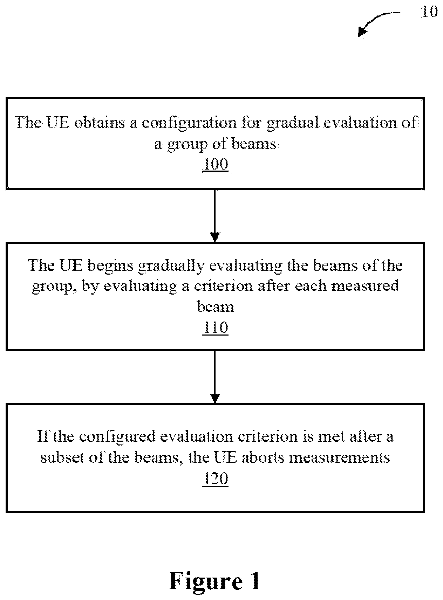

The detailed embodiments of the SS target, the threshold of the SS target selection criterion, measurement window size and so on are illustrated in the figures. Referring to figure 1, there is provided a method 10 for UE configuration.

The method comprises the following steps. In step 100, the UE obtains a configuration for gradual evaluation of a group of beams. In step 100, the UE begins gradually evaluating the beams of the group, by evaluating a criterion after each measured beam. In step 120, if the configured evaluation criterion is met after a subset of the beams, or as soon as the configured evaluation criterion is met, the UE aborts measurements. The SS target selection criterion can, for a camping UE in RRC_IDLE or RRC_INACTIVE, be configurable and conveyed to the UE via system information. It may be included in SI that is periodically broadcast (e.g. the so-called "minimum SI" in NR or in System Information (SI) which is provided on-demand (e.g. as part of the "other SI" in NR). Providing the SS target selection criterion through dedicated signaling is also an option, e.g. for a UE in RRC _CONNECTED including when the UE is switched to RRC _IDLE or RRC INCATIVE state. Such dedicated signaling may override any corresponding information in the SI (if any). Yet another alternative is that the SS target selection criterion can be fixed through standardization as a pre-configuration.

The details of the proposed method will be described using some examples, referring to the figures.

The notations used in the description include:
- X: SS Burst Set periodicity;
- Tintra-ceii: a UE performs the intra-cell measurement and evaluation at least every T_{intra-cell};
- T1, T2, T3, T4, and T5: a set of intra-cell measurement occasions for a UE;
- Sintra-ceii: the SS target selection criterion;
- Sₘₑₐₛᵤᵣₑ: the outcome of the SS target candidate measurement; and
- Sₜₕᵣₑₛ: the threshold for SS target selection.

The SS target selection criterion S_{intra-cell} is fulfilled when the measurement is greater than the threshold (Sₘₑₐₛᵤᵣₑ > Sₜₕᵣₑₛ). In an alternate embodiment, the selection criterion may be fulfilled when the measurement is greater than or equal to the threshold.

The SS target is a set of SS signals which a UE track, measure and evaluate in the next measurement occasion. The details of the SS target and the Sₜₕᵣₑₛ are described in more details in the sections entitled *SS target* and *SS target selection threshold* respectively, further below.

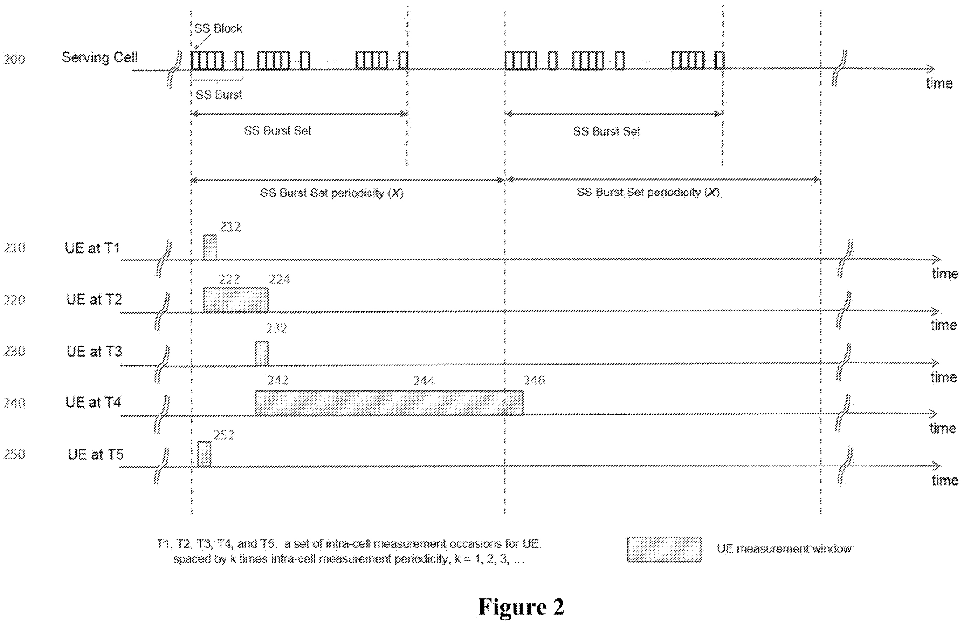

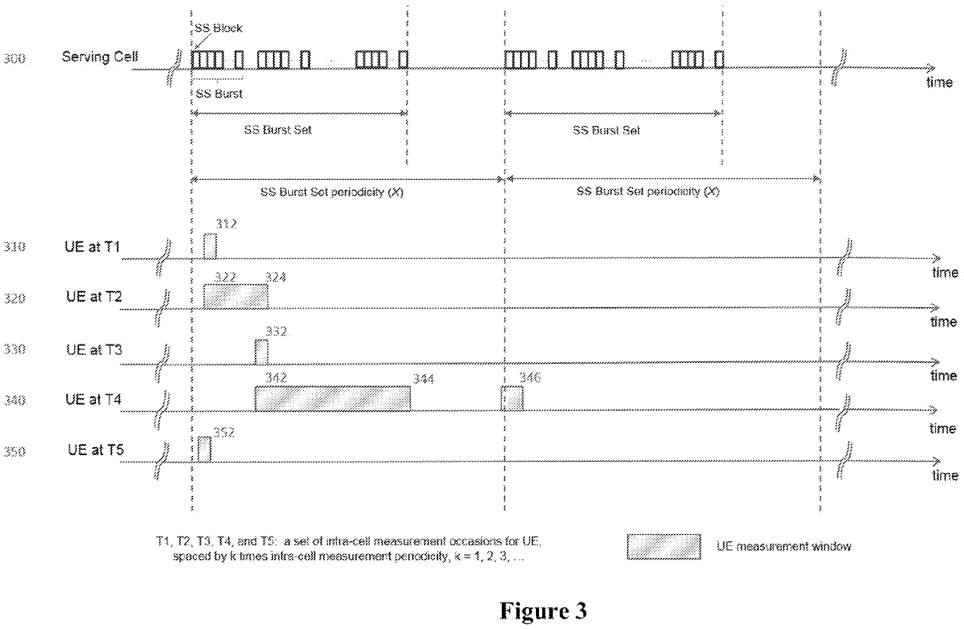

Figures 2 and 3 illustrate a method where a UE performs the measurement(s) and evaluation at measurement occasions, T1 to T5, where the adjacent measurement occasions are spaced by k^{∗} T_{intra-cell} (k = 1, 2, 3, ...) and T_{intra-cell} is larger than 2^{∗}X. X being, as explained previously, the SS Burst Set periodicity and the SS Burst Set being periodically transmitted by the serving cell of a UE.

A configured UE, at each measurement occasion, gradually evaluates measurements (step 110 of figure 1). This is exemplified below by evaluations at measurement occasions T1 to T5. At the evaluation of each SS target in each measurement occasion, the UE evaluates the signals associated to the SS target gradually, thereby enabling an adaption of the measurement window length. In the steps of the example, the UE changes the camping target SS.

The UE in the example of figures 2 and 3 is configured for gradual evaluation of beam groups (200, 300).

At step 210 of figure 2 and step 310 of figure 3, the UE performs intra-cell measurement at the measurement occasion T1. Based on prior knowledge, the UE knows the time offset of the SS target in the SS Burst Set duration. The UE open the measurement event to measure the SS target and evaluates the SS target selection criterion. The detail of the measurement window size is illustrated in the Section entitled *UE measurement window size,* further below. The SS target selection criterion S_{intra-cell} is fulfilled, and the UE keeps the current selection of the SS target and terminates the measurement event (212, 312). The measurement event refers to the measurement behavior of the UE during each measurement occasion.

At step 220 of figure 2 and step 320 of figure 3, the UE performs intra-cell measurement at the measurement occasion T2. Based on prior knowledge, the UE knows the time offset of the SS target in the SS Burst Set duration. The UE opens the measurement event to measure the SS target and evaluates the SS target selection criterion. The SS target selection criterion S_{intra-cell} is not fulfilled (222, 322), and the UE keeps the measurement event open in the subsequent SS blocks and searches for the SS target candidates. The UE finds a SS target candidate in the same SS Burst Set duration with the SS target selection criterion S_{intra-cell} being fulfilled, and the UE selects the SS target candidate as the new SS target and closes the measurement event (224, 324).

At step 230 of figure 2 and step 330 of figure 3, the UE performs intra-cell measurement at the measurement occasion T3. Based on prior knowledge, the UE knows the time offset of the latest SS target in the SS Burst Set duration. The UE opens the measurement event to measure the latest SS target and evaluates the SS target selection criterion. The SS target selection criterion S_{intra-cell} is fulfilled, and the UE keeps the current selection of the SS target and closes the measurement event (232, 332).

At step 240 of figure 2 and step 340 of figure 3, the UE performs intra-cell measurement at the measurement occasion T4. Based on prior knowledge, the UE knows the time offset of the SS target in the SS Burst Set duration. The UE opens the measurement event to measure the SS target and evaluates the SS target selection criterion. The SS target selection criterion S_{intra-cell} is not fulfilled (242, 342), and the UE keeps the measurement event open in the subsequent SS blocks and searches for the SS target candidates. The UE finds a SS target candidate in the next SS Burst Set duration with the SS target selection criterion S_{intra-cell} being fulfilled, and then the UE selects the SS target candidate as the new SS target and closes the measurement event (246, 346).

In the alternative 1 (figure 2), the UE does not have the prior knowledge of the SS Burst Set duration. The UE keeps the measurement window open (244) during the period without SS Burst Set being transmitted. In the alternative 2 (figure 3), the UE has the prior knowledge of the SS Burst Set duration. The UE can close the measurement window (344) during the period without SS Burst Set being transmitted.

At step 250 of figure 2 and step 350 of figure 3, the UE performs intra-cell measurement at the measurement occasion T5. Based on prior knowledge, the UE knows the time offset of the latest SS target in the SS Burst Set duration. The UE opens the measurement event to measure the latest SS target and evaluates the SS target selection criterion. The SS target selection criterion S_{intra-cell} is fulfilled, and the UE keeps the current selection of the SS target and closes the measurement event (252, 352).

In figure 2, even though the figure implies that the UE in steps 210-250 (measurement occasions T1, T2, T3, T4 and T5) measures on the same SS Burst Set, this is just an illustration convenience to make the figure more compressed, and the UE would actually measure on a different SS Burst Set at each of these steps and measurement occasions.

In figure 3, even though the figure implies that the UE in steps 310-350 (measurement occasions T1, T2, T3, T4 and T5) measures on the same SS Burst Set, this is just an illustration convenience to make the figure more compressed, and the UE would actually measure on a different SS Burst Set at each of these steps and measurement occasions.

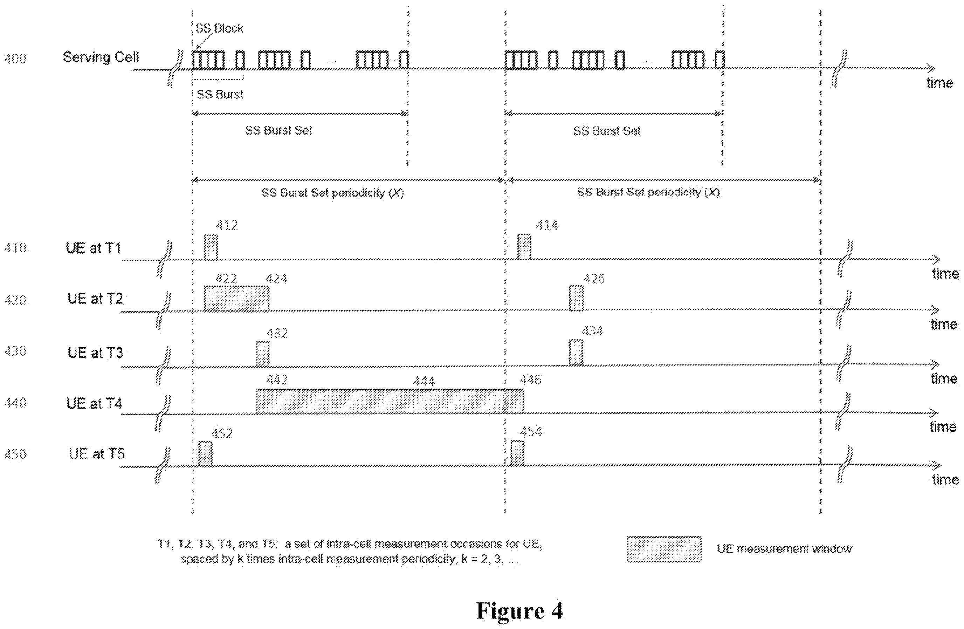

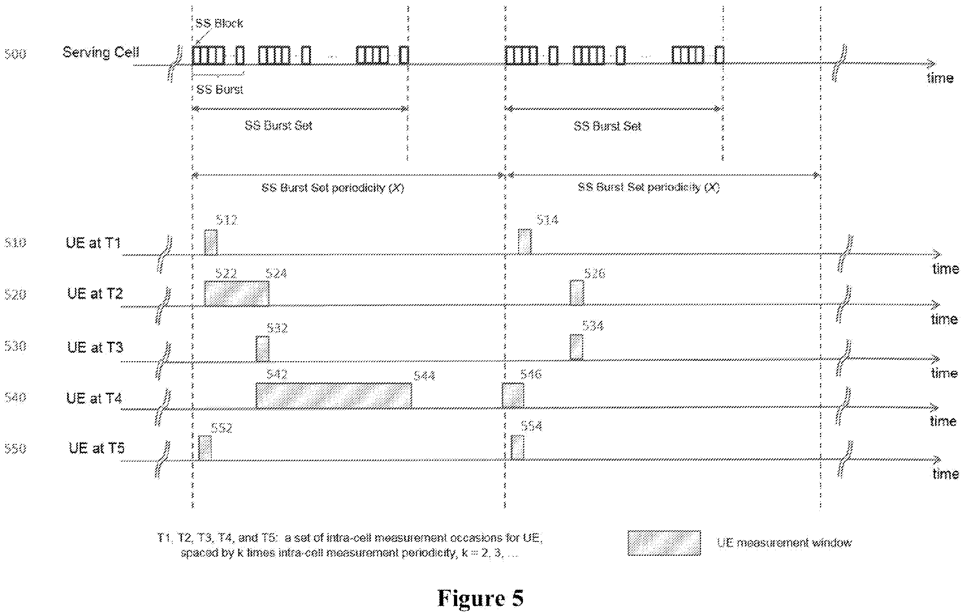

Figure 4 and figure 5 illustrate a method where the UE performs the measurement(s) and evaluation at measurement occasions, T1 to T5, where the adjacent measurement occasions are spaced by k^{∗} T_{intra-cell} (k = 2, 3, ...) and T_{intra-cell} is equal to X and where the SS Burst Set is periodically transmitted by the serving cell of a UE.

A configured UE does, at each measurement occasion, gradually evaluate measurements (step 110 of figure 1). This is exemplified below by evaluations at measurement occasions T1 to T5. At the evaluation of each SS target in each measurement occasion, the UE evaluates the signals associated to the SS target gradually, thereby enabling an adaption of the measurement window length. In the steps of the example, the UE changes the camping target SS.

The UE in the example of figures 4 and 5 is configured for gradual evaluation of beam groups (400, 500).

At step 410 of figure 4 and step 510 of figure 5, the UE performs intra-cell measurement at the measurement occasion T1. Based on prior knowledge, the UE knows the time offset of the SS target in the SS Burst Set duration. The UE open the measurement event to measure the SS target and evaluates the SS target selection criterion. The detail of the measurement window size is illustrated in the section entitled *UE measurement window size,* further below. The SS target selection criterion S_{intra-cell} is fulfilled, and the UE keeps the current selection of the SS target and closes the measurement event (412, 512). When performing the measurement in the next SS Burst Set duration, UE knows the time offset of the SS target and opens the measurement event to measure the SS target and evaluates the SS target selection criterion. The SS target selection criterion S_{intra-cell} is fulfilled and the UE keeps the current selection of the SS target and closes the measurement event (414, 514).

At step 420 of figure 4 and step 520 of figure 5, the UE performs intra-cell measurement at the measurement occasion T2. Based on prior knowledge, the UE knows the time offset of the SS target in the SS Burst Set duration. The UE opens the measurement event to measure the SS target and evaluates the SS target selection criterion. The SS target selection criterion S_{intra-cell} is not fulfilled (422, 522) and the UE keeps the measurement event open in the subsequent SS blocks and searches for the SS target candidates. The UE finds a SS target candidate in the same SS Burst Set duration with the SS target selection criterion S_{intra-cell} being fulfilled, and the UE selects the SS target candidate as the new SS target and close the measurement event (424, 524). When performing the measurement in the next SS Burst Set duration, UE knows the time offset of the SS target and opens the measurement event to measure the SS target and evaluates the SS target selection criterion. The SS target selection criterion S_{intra-cell} is fulfilled and the UE keeps the current selection of the SS target and closes the measurement event (426, 526).

At step 430 of figure 4 and step 530 of figure 5, the UE performs intra-cell measurement at the measurement occasion T3. Based on prior knowledge, the UE knows the time offset of the latest SS target in the SS Burst Set duration. The UE opens the measurement event to measure the latest SS target and evaluates the SS target selection criterion. The SS target selection criterion S_{intra-cell} is fulfilled, and the UE keeps the current selection of the SS target and closes the measurement event (432, 532). When performing the measurement in the next SS Burst Set duration, UE knows the time offset of the SS target and opens the measurement event to measure the SS target and evaluates the SS target selection criterion. The SS target selection criterion S_{intra-cell} is fulfilled and the UE keeps the current selection of the SS target and closes the measurement event (434, 534).

At step 440 of figure 4 and step 540 of figure 5, the UE performs intra-cell measurement at the measurement occasion T4. Based on the prior knowledge, the UE knows the time offset of the SS target in the SS Burst Set duration. The UE opens the measurement event to measure the SS target and evaluates the SS target selection criterion. The SS target selection criterion S_{intra-cell} is not fulfilled (442, 542), and the UE keeps the measurement event open in the subsequent SS blocks and searches for the SS target candidates. The UE finds a SS target candidate in the next SS Burst Set duration with the SS target selection criterion S_{intra-cell} being fulfilled, and the UE selects the SS target candidate as the new SS target and closes the measurement event (446, 546).

In the alternative 1 (figure 4), the UE does not have prior knowledge of the SS Burst Set duration. The UE keeps the measurement window open (444) during the period without SS Burst Set being transmitted. In the alternative 2 (figure 5), the UE has prior knowledge of the SS Burst Set duration. The UE can close the measurement window (544) during the period without SS Burst Set being transmitted.

At step 450 of figure 4 and step 550 of figure 5, the UE performs intra-cell measurement at the measurement occasion T5. Based on prior knowledge, the UE knows the time offset of the latest SS target in the SS Burst Set duration. The UE opens the measurement event to measure the latest SS target and evaluates the SS target selection criterion. The SS target selection criterion S_{intra-cell} is fulfilled, and the UE keeps the current selection of the SS target and closes the measurement event (452, 552). When performing the measurement in the next SS Burst Set duration, the UE knows the time offset of the SS target and opens the measurement event to measure the SS target and evaluates the SS target selection criterion. The SS target selection criterion S_{intra-cell} is fulfilled and the UE keeps the current selection of the SS target and closes the measurement event (454, 554).

In figure 4, even though the figure implies that the UE in steps 410-450 (measurement occasions T1, T2, T3, T4 and T5) measures on the same SS Burst Set, this is just an illustration convenience to make the figure more compressed, and the UE would actually measure on a different SS Burst Set at each of these steps and measurement occasions.

In figure 5, even though the figure implies that the UE in steps 510-550 (measurement occasions T1, T2, T3, T4 and T5) measures on the same SS Burst Set, this is just an illustration convenience to make the figure more compressed, and the UE would actually measure on a different SS Burst Set at each of these steps and measurement occasions.

The following sections describe variants of some concepts that may be used in relation with at least some embodiments.

### SS target

The SS target is a set of SS signals which a UE can track and measure on in the next measurement occasion.

In one embodiment, the set of the SS signals consists of one single SS block.

In another embodiment, the set of the SS signals consists of one SS Burst. Note that the UE may not measure on all the SS signals, but may terminate the measurement procedure once the SS target selection criterion is met (i.e. Sₘₑₐₛᵤᵣₑ >Sthres for at least one SS signal).

In yet another embodiment, the set of SS signals consists of a subset of the SS transmissions in an SS Burst, wherein this subset of transmissions consists of consecutive transmissions, including the SS transmission that the UE previously has selected as the best (i.e. the one that first met the SS target selection criterion (i.e. Sₘₑₐₛᵤᵣₑ >Sthres) at the preceding measurement occasion). The rationale for including SS transmissions before and after the previously selected transmission is that if the UE has moved out of the downlink transmission beam of the previously selected SS transmission, then it is likely that it has moved into the coverage of one of the adjacent or close to adjacent beams. This assumes that the subsequent SS transmissions are moved stepwise around the coverage area (as opposed to "jumping" around in a less regular pattern). Alternatively, the set of (multiple) SS signals may be considered jointly, i.e. the quality of all the SS signal beams in the set are taken into account (see the section entitled *Using the solution with multiple beams considered in the cell suitability assessment* for more details).

In one embodiment the SS signals that the UE measures on are the PSS and the SSS.

In another embodiment the UE only measures on the SSS, i.e. the SS signals that the UE measures on are in fact only a single signal, i.e. the SSS. The UE may still use the PSS for synchronization purpose to enable detection of the SSS.

In another embodiment the SS signals that the UE measures on are the PSS, the SSS and the TSS.

In yet another embodiment the SS signals that the UE measures on are the entire SS Block.

In yet another embodiment, the SS signals is a signal separated into a synchronization part and a measurement part. One example of such a signal is a PSS/SSS associated with a Channel State Information (CSI) Reference Signal (RS). Another example is a CSI-RS with an embedded synchronization component, where part of the signal is used for synchronization. Yet another example is a Demodulation Reference Signal (DMRS).

In yet another embodiment, the SS signal is an additional reference signal, which is transmitted periodically, or not periodically *"aperiodically"* including on demand. The signal may be transmitted for the purpose of beam evaluations.

### SS target selection threshold

The SS target selection threshold, Sₜₕᵣₑₛ, is utilized by a UE to evaluate the SS target selection criterion Sintra-ceii. The threshold is configured by the network (e.g., gNB, gNB is a Base station in NR (corresponding to eNB in LTE)) and is transmitted to the UE or obtained by the UE via means discussed herein.

In one embodiment, Sₜₕᵣₑₛ is a set of values configured for individual SS block beam depending on the RACH configurations.

In another embodiment, Sₜₕᵣₑₛ is a set of values configured for each SS Burst.

In another embodiment, Sₜₕᵣₑₛ is a common value configured for all of the Downlink (DL) SS block beams.

In another embodiment, Sₜₕᵣₑₛ is derived by the UE based on a parameter (e.g., a similar threshold for the cell-level measurement) configured by the network (e.g., gNB).

### UE measurement window size

The window size is suitable to allow the measurement of the SS target with a guard time taking the post processing of the measured samples, the time synchronization error, e.g. due to clock drifting, and any other relevant elements into account. The measurement window is sometimes referred to as a search space, and may be associated to a frequency band configuration.

### Initial SS target selection

For the first SS target selection a UE performs in a cell there may be special rules. One way may be that the UE uses a default SS target selection criterion and follows the method described previously. The default SS target selection criterion may be standardized (or stored in the Universal Subscriber Identity Module (USIM)) or possibly provided via the SI.

Another way may be that the UE first measures on a complete beam sweep, e.g. a full SS Burst Set, and selects as the initial SS target the beam with the best measured quality. For subsequent measurements the UE can use the regular SS target selection method as described above. Optionally, the UE may perform periodic full beam sweep measurements to find the beam that is currently actually the best to avoid that a UE gets "stuck" too long at the same SS target beam, despite that it may no longer be the best, but still fulfills the SS target selection criterion.

In addition, there may be a minimum SS target selection threshold value below which the cell is not considered as "suitable". And there may be an additional minimum threshold below which the cell is not considered "acceptable", where this minimum threshold may be equal to or smaller than the minimum threshold for cell "suitability". In the context of cell (re-)selection, 3GPP use the expression "suitable cell" for a cell that meets all the specified criteria for providing regular service for a certain UE. A UE cannot camp for regular service on a cell which does not fulfill the criteria for a "suitable cell". A UE camping on a cell for regular service is referred to as being "camped normally".

In the context of cell (re-)selection, 3GPP use the expression "acceptable cell" for a cell that meets all the specified criteria for providing limited service (e.g. emergency calls) for a certain UE. A UE cannot camp for limited service on a cell which does not fulfill the criteria for an "acceptable cell". A cell that does not fulfill the criteria for an "acceptable cell" does not fulfill the criteria for a "suitable cell" either. A UE camping on a cell for regular limited service is referred to as being "camped on any cell".

A comparative example **for inter-cell measurements** The method as described above for intra-cell measurements may be re-used also for inter-cell measurements, e.g. performed by a UE in RRC_IDLE or RRC_INACTIVE state, as well as in RRC-CONNECTED. The UE would have to remember the timing of the previously selected SS target, as well as any other obtained information related to the SS transmissions, such as SS Burst Set duration, for each of the neighbor cells it is repeatedly measuring on. Other than that, the previously described method for intra-cell measurements may be reused for inter-cell measurements.

### Adaptive SS target selection criterion

The SS target selection criterion may or may not be fixed (i.e. a fixed value standardized or configured per cell). The SS target selection criterion may be adaptive in a manner that adapts it to the conditions of a cell or the current radio channel conditions of a certain UE. This adaptivity/adaptiveness can make the SS target selection criterion UE specific, as it adapts to the conditions of the individual UE.

The usefulness of such adaptivity/adaptiveness can be motivated by improved SS target selection, considering, for example, that a fixed SS target selection criterion has to be adapted to the conditions a UE experiences close to the cell edge. This essentially means that for a UE closer to the transmission point, several beams (certainly more than at the cell edge) may fulfill the SS target selection criterion. As a consequence, a UE with good channel conditions may be "stuck" in a beam which is far from the best one, but that still fulfills the SS target selection criterion. Although this may not matter much as long as the UE is just camping (i.e. in RRC_IDLE or RRC_INACTIVE state), it may result in that the UE gets lower data rate when it switches to RRC _CONNECTED state, at least until the beam refinement procedure has tuned in to an optimal beam. The beam refinement procedure can surely do this, but the UE probably loses some time and may not be able to transmit its data as quickly as it might have been able to do if it had camped on the best beam. This may matter, at least for the case of small data transmissions, i.e. when the UE only has a small amount of data to transmit (in which case the UE may even use a streamlined procedure which quickly gets it to a state where it can transmit its data and then is quickly moved back to the regular RRC_IDLE or RRC_INACTIVE state when the data is transmitted).

For the actual adaptation of the SS target selection criterion the UE may increase the quality threshold, Sₜₕᵣₑₛ, of the SS target selection criterion if it measures a beam which has a quality significantly above (e.g. X dB) the current SS target selection criterion. Lowering of the quality threshold may be done differently. If the UE measures the beams of a complete sweep without finding a beam that fulfills the quality criterion, the UE may then select the best of the beams it measured on and set the new SS target selection criterion threshold in relation to the measured quality of this beam, e.g. Y dB, below the measured quality.

For the initial SS target selection in a cell, the UE may use a default SS target selection criterion (as previously described) or measure on a complete SS Block beam sweep, select the best beam, and set the quality threshold of the SS target selection criterion in relation to the measured quality of the selected (best) beam, e.g. Z dB, below the measured quality.

The values of X, Y and/or Z may be provided via system information, stored in the USIM, fixed through standardization or left to the UE implementation.

In addition to the above, as previously described, there may be a minimum threshold value below which the cell is not considered as "suitable". And there may be an additional minimum threshold below which the cell is not considered "acceptable", where this minimum threshold may be equal to or smaller than the minimum threshold for cell "suitability". When adapting the quality threshold, Sₜₕᵣₑₛ, of the SS target selection criterion, the quality threshold may not be set to a lower value than any such minimum threshold.

Optionally, the UE may perform periodic full beam sweep measurements to find the beam that is currently actually the best to avoid that a UE gets "stuck" too long at the same SS target beam, despite that it may no longer be the best, but still fulfills the SS target selection criterion.

### Using the solution with multiple beams considered in the cell suitability assessment

Special considerations have to be given to the case where multiple SS Block transmissions (e.g. SS Block beams) should be considered during cell re-selection assessments (i.e. during measurements of a cell's quality for the purpose of providing basis for a potential cell re-selection decision). The same goes for the case where multiple SS Bloc transmissions (e.g. SS Block beams) should be considered during cell selection assessments (i.e. during measurements of a cell's quality for the purpose of providing basis for a potential cell selection decision).

In the case of cell re-selection, the number of SS Block transmissions/beams to take into account, N, is configurable and assumedly included in the system information of a cell. In the case of cell selection, it is not decided in 3GPP whether this value will be configurable or fixed or even if the case where multiple SS Block transmissions/beams is even relevant.

In one scenario, multiple, e.g. N, SS Block beams are to be taken into account and these beams have to be adjacent, i.e. consecutively transmitted without other SS Block beam transmissions in between. For this scenario, the SS target consists of the SS signals (SSS, PSS+SSS, PSS+SSS+TSS or the full SS Block) of N SS Block beams. A sliding window approach can be used when the UE selects the SS target in this scenario. As the UE measures on consecutive SS Block beams, it has to remember the measured quality of the N last measured beams. When the qualities of the latest N measured beams together fulfill the SS target selection criterion, these N beams are selected as the SS target.

For the initial SS target selection in a cell, the UE may first measure on a complete SS Block beam sweep to identify the best occurrence of N consecutive beams in the beam sweep in the cell and select those N beams as the initial SS target.

The target selection criterion may be adapted to be e.g.:
- a quality threshold for the average (plain or weighted) of the measured qualities of the N beams,
- as above, combined with a minimum quality threshold which the best of the N beams must exceed, or
- any of the above, combined with a minimum quality threshold which the worst of the N beams must fulfill.

When the UE has selected a SS target and stored its timing information, then, during subsequent measurements, the UE may choose to start its measurements at the time of the transmission of the first beam in the SS target (including a margin for synchronization errors, e.g. clock drifts, etc. as described in the section entitled *UE measurement window size*)*.*

In another scenario, the N SS Block beams to be taken into account can be any of the beams of a SS Block beam sweep. That is, the N beams may not be consecutively transmitted and one or more other SS Block beams may be transmitted in between any two of the N SS Block beams. Note that even though such a set of N beams will not be adjacently transmitted, they may still all reach the UE due to reflections and/or diffraction. These N beams should preferably be the best N beams in the cell. In this scenario a sliding window is not suitable, but a similar approach may be used. As the UE measures on consecutive SS Block beams, it has to remember the measured quality of the N best measured beams. This set of N beams changes during the measurement procedure, every time the UE detects a beam with a better measured quality than at least one (the worst) of the N beams. Then the UE replaces the worst of the N beams with the new beam. This way the set of N beams is gradually improved as the UE measures on beams in the beam sweep and when the qualities of the set of N beams together fulfill the SS target selection criterion, these N beams are selected as the SS target.

For the initial SS target selection in a cell, the UE may first measure on a complete beam sweep to identify the N best beams in the cell and select those N beams as the initial SS target.

For subsequent measurements, the UE may start its measurement procedure at the time of the transmission of the first beam in the SS target (including a margin for synchronization errors, e.g. clock drifts, etc. as described in the section entitled *UE measurement window size*)*.* The UE may then keep its receiver active, and potentially measure on all beams, until it has measured on all the N beams in the SS target (to check if it still fulfills the SS target selection criterion). As an option, the UE may turn off its receiver (and/or refrain from measuring) when there are gaps between the N beams, i.e. when other SS Block beams are transmitted in between.

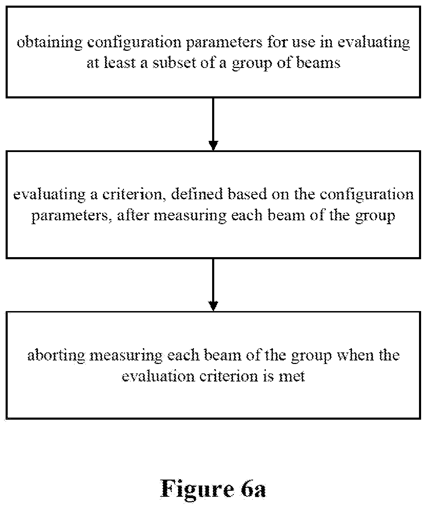

Figure 6a illustrates a method according to an embodiment for limiting beam measurements by an idle or inactive User Equipment (UE), comprising:
- obtaining configuration parameters for use in evaluating at least a subset of a group of beams;
- evaluating a criterion, defined based on the configuration parameters, after measuring each beam of the group; and
- aborting measuring each beam of the group when the evaluation criterion is met.

In the method of figure 6a, measuring each beam may comprise measuring Synchronization Signals (SS). The SS may comprise one SS Burst. The SS may comprise a subset of the SS transmissions in an SS Burst. The subset of the SS transmissions may comprise consecutive SS transmissions, including an SS transmission that the UE has previously selected as best SS transmission. The SS may comprise a Secondary Synchronization Signal (SSS). The SS may further comprise a Primary Synchronization Signal (PSS). The SS may further comprise a Tertiary Synchronization Signal (TSS). The SS may comprise an entire SS Block. The SS may be a signal separated into a synchronization part and a measurement part. The criterion may be a SS target selection threshold used by the UE to evaluate a SS target selection criterion. The SS target selection threshold may be configured by the network and may be transmitted to the UE. The SS target selection threshold may be configured by the network and may be obtained by the UE. The SS target selection threshold may comprise a set of values configured for individual SS block beam depending on Random Access Channel (RACH) configurations. The SS target selection threshold may comprise a set of values configured for each SS Burst. The SS target selection threshold may comprise a common value configured for all of the Downlink (DL) SS block beams. The SS target selection threshold may be derived by the UE based on a parameter configured by the network.

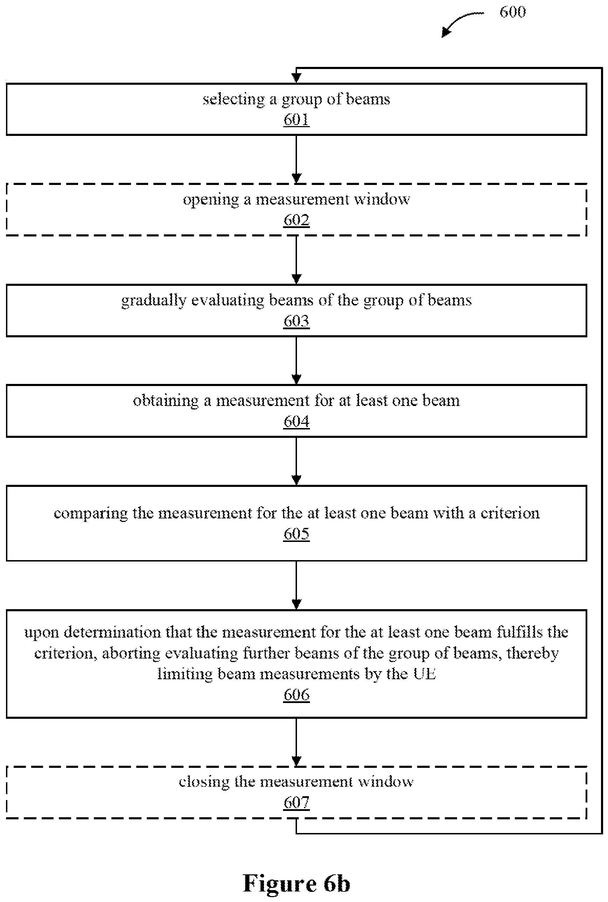

Figure 6b illustrates a method 600 for limiting beam measurements by a User Equipment (UE) 70 during an occasion of radio channel quality measurement. The method comprises selecting, step 601, a group of beams and gradually evaluating, step 603, beams of the group of beams. Gradually evaluating beams includes obtaining, step 604, a measurement for at least one beam, comparing, step 605, the measurement for the at least one beam with a criterion, and upon determination that the measurement for the at least one beam fulfills the criterion, aborting, step 606, evaluating further beams of the group of beams, thereby limiting beam measurements by the UE.

The method may further comprise, previous to gradually evaluating, opening, step 602, a measurement window. Aborting evaluating may further comprise closing, step 607, the measurement window. The method may further comprise closing the measurement window during periods without beam transmissions. The method may be executed iteratively.

The UE may be in RRC_IDLE state or RRC_INACTIVE state and the occasion of radio channel quality measurement may be an occasion of intra-cell Radio Resource Management (RRM) measurement.

The selecting may further comprise selecting the group of beams based on a default selection of beams for use for a first occasion of radio channel quality measurement or selecting a complete beam sweep.

The selecting may further comprise selecting the group of beams based on prior knowledge of at least one beam previously determined as fulfilling the criterion and the prior knowledge may be used for selecting the group of beams by selecting a target subset of beams.

The selecting may further comprise selecting a single Synchronization Signal (SS) Block, an SS Burst, an SS Burst Set or a subset of consecutive transmissions of Synchronization Signals, SS Blocks, SS Bursts or SS Burst Sets.

The obtaining may further comprise measuring any one of a Reference Signal Received Power (RSRP), a Reference Signal Received Quality (RSRQ), a Signal to Noise Ratio (SNR) or a Signal to Interference and Noise Ratio (SINR) of any one of, or of any combination of, Synchronization Signal (SS) including: a Primary Synchronization Signal (SS) (PSS), a Secondary Synchronization Signal (SSS), a Tertiary Synchronization Signal (TSS), a Channel State Information (CSI) Reference Signal (RS) (CSI-RS) or a Demodulation Reference Signal (DMRS).

The comparing may further comprise comparing the measurement for the at least one beam with a selection threshold and the determination that the measurement for the at least one beam fulfills the criterion may comprise determining that the measurement for the at least one beam is greater than or equal to the selection threshold.

The selection threshold may be a Synchronization Signal (SS) selection threshold and the SS selection threshold may be configured by the network and may be obtained by the UE or may be derived by the UE based on a parameter configured by the network.

The SS selection threshold may comprise a set of values configured for individual SS Blocks depending on Random Access Channel (RACH) configurations, a set of values configured for each SS Burst or a common value configured for all Downlink (DL) SS Blocks.

The method illustrated in figure 6b may further include a step or many of the steps described in relation with figures 1 to 6a.

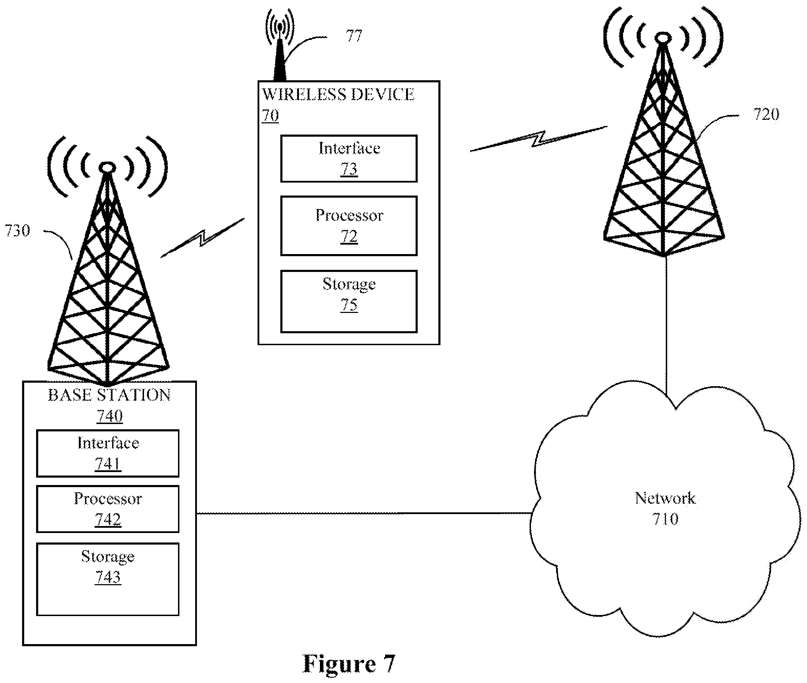

Although the solutions described above may be implemented in any appropriate type of system using any suitable components, particular embodiments of the described solutions may be implemented in a wireless network such as the example wireless communication network illustrated in figure 7. In the example embodiment of figure 7, the wireless communication network provides communication and other types of services to one or more wireless devices (WD) or user equipments (UE). In the illustrated embodiment, the wireless communication network includes one or more instances of network nodes that facilitate the wireless devices' access to and/or use of the services provided by the wireless communication network. The wireless communication network may further include any additional elements suitable to support communication between wireless devices or between a wireless device and another communication device, such as a landline telephone.

Network 710 may comprise one or more IP networks, public switched telephone networks (PSTNs), packet data networks, optical networks, wide area networks (WANs), local area networks (LANs), wireless local area networks (WLANs), wired networks, wireless networks, metropolitan area networks, and other networks to enable communication between devices.

The wireless communication network may represent any type of communication, telecommunication, data, cellular, and/or radio network or other type of system. In particular embodiments, the wireless communication network may be configured to operate according to specific standards or other types of predefined rules or procedures. Thus, particular embodiments of the wireless communication network may implement communication standards, such as Global System for Mobile Communications (GSM), Universal Mobile Telecommunications System (UMTS), Long Term Evolution (LTE), and/or other suitable 2G, 3G, 4G, 5th Generation (5G) or NR standards; wireless local area network (WLAN) standards, such as the IEEE 802.11 standards; and/or any other appropriate wireless communication standard, such as the Worldwide Interoperability for Microwave Access (WiMax), Bluetooth, and/or ZigBee standards.

Figure 7 illustrates a wireless network comprising a more detailed view of network node 740 and wireless device (WD) 70, in accordance with a particular embodiment. For simplicity, figure 7 only depicts network 710, network nodes 740 and 720, and WD/UE 70. Network node 740 comprises processor 742, storage 743, interface 741, and antenna 730. Similarly, WD 70 comprises processor 72, storage 75, interface 73 and antenna 77. These components may work together in order to provide network node and/or wireless device functionality, such as providing wireless connections in a wireless network. In different embodiments, the wireless network may comprise any number of wired or wireless networks, network nodes, base stations, controllers, wireless devices, relay stations, and/or any other components that may facilitate or participate in the communication of data and/or signals whether via wired or wireless connections.

As used herein, "network node" refers to equipment capable, configured, arranged and/or operable to communicate directly or indirectly with a wireless device and/or with other equipment in the wireless communication network that enable and/or provide wireless access to the wireless device. Examples of network nodes include, but are not limited to, access points (APs), in particular radio access points. A network node may represent base stations (BSs), such as radio base stations. Particular examples of radio base stations include Node Bs, and evolved Node Bs (eNBs). Base stations may be categorized based on the amount of coverage they provide (or, stated differently, their transmit power level) and may then also be referred to as femto base stations, pico base stations, micro base stations, or macro base stations. "Network node" also includes one or more (or all) parts of a distributed radio base station such as centralized digital units and/or remote radio units (RRUs), sometimes referred to as Remote Radio Heads (RRHs). Such remote radio units may or may not be integrated with an antenna as an antenna integrated radio. Parts of a distributed radio base stations may also be referred to as nodes in a distributed antenna system (DAS).

"Network node" includes nodes that are located outside as well as inside buildings or structures. In some instances, structures may cause degradation of the signals or even partially or totally block signal propagation.

As a particular non-limiting example, a base station may be a relay node or a relay donor node controlling a relay.

Yet further examples of network nodes include multi-standard radio (MSR) radio equipment such as MSR BSs, network controllers such as radio network controllers (RNCs) or base station controllers (BSCs), base transceiver stations (BTSs), transmission points, transmission nodes, Multi-cell/multicast Coordination Entities (MCEs), core network nodes (e.g., Mobile Switching Center (MSC)s, Mobility Management Entity (MME)s), Operation and Maintenance (O&M) nodes, Operations Support System (OSS) nodes, Self Optimized Network (SON) nodes, positioning nodes (e.g., Evolved-Serving Mobile Location Centres (E-SMLCs)), and/or Minimization of Drive Tests (MDTs). More generally, however, network nodes may represent any suitable device (or group of devices) capable, configured, arranged, and/or operable to enable and/or provide a wireless device access to the wireless communication network or to provide some service to a wireless device that has accessed the wireless communication network.

As used herein, the term "radio node" is used generically to refer both to wireless devices and network nodes, as each is respectively described above.

In figure 7, Network node 740 comprises processor 742, storage 743, interface 741, and antenna 730. These components are depicted as single boxes located within a single larger box. In practice however, a network node may comprise multiple different physical components that make up a single illustrated component (e.g., interface 741 may comprise terminals for coupling wires for a wired connection and a radio transceiver for a wireless connection). As another example, network node 740 may be a virtual network node in which multiple different physically separate components interact to provide the functionality of network node 740 (e.g., processor 742 may comprise separate processors located in separate enclosures, where each processor is responsible for a different function for a particular instance of network node 740). Similarly, network node 740 may be composed of multiple physically separate components (e.g., a NodeB component and a RNC component, a BTS component and a BSC component, etc.), which may each have their own respective processor, storage, and interface components. In certain scenarios in which network node 740 comprises multiple separate components (e.g., BTS and BSC components), one or more of the separate components may be shared among several network nodes. For example, a single RNC may control multiple NodeB's. In such a scenario, each unique NodeB and BSC pair, may be a separate network node. In some embodiments, network node 740 may be configured to support multiple radio access technologies (RATs). In such embodiments, some components may be duplicated (e.g., separate storage 743 for the different RATs) and some components may be reused (e.g., the same antenna 730 may be shared by the RATs).

Processor 742 may be a combination of one or more of a microprocessor, controller, microcontroller, central processing unit, digital signal processor, application specific integrated circuit, field programmable gate array, or any other suitable computing device, resource, or combination of hardware, software and/or encoded logic operable to provide, either alone or in conjunction with other network node 740 components, such as storage 743, network node 740 functionality. For example, processor 742 may execute instructions stored in storage 743. Such functionality may include providing various wireless features discussed herein to a wireless device, such as WD 70, including any of the features or benefits disclosed herein.

Storage 743 may comprise any form of volatile or non-volatile computer readable memory including, without limitation, persistent storage, solid state memory, remotely mounted memory, magnetic media, optical media, random access memory (RAM), read-only memory (ROM), removable media, or any other suitable local or remote memory component. Storage 743 may store any suitable instructions, data or information, including software and encoded logic, utilized by network node 740. Storage 743 may be used to store any calculations made by processor 742 and/or any data received via interface 741.

Network node 740 also comprises interface 741 which may be used in the wired or wireless communication of signalling and/or data between network node 740, network 710, and/or WD 70. For example, interface 741 may perform any formatting, coding, or translating that may be needed to allow network node 740 to send and receive data from network 710 over a wired connection. Interface 741 may also include a radio transmitter and/or receiver that may be coupled to or a part of antenna 730. The radio may receive digital data that is to be sent out to other network nodes or WDs via a wireless connection. The radio may convert the digital data into a radio signal having the appropriate channel and bandwidth parameters. The radio signal may then be transmitted via antenna 730 to the appropriate recipient (e.g., WD 70).

Antenna 730 may be any type of antenna capable of transmitting and receiving data and/or signals wirelessly. In some embodiments, antenna 730 may comprise one or more omni-directional, sector or panel antennas operable to transmit/receive radio signals between, for example, 2 GHz and 66 GHz. An omni-directional antenna may be used to transmit/receive radio signals in any direction, a sector antenna may be used to transmit/receive radio signals from devices within a particular area, and a panel antenna may be a line of sight antenna used to transmit/receive radio signals in a relatively straight line.

Network node 740 may perform steps or functions described herein in relation with some embodiments.

As used herein, "wireless device" (WD) refers to a device capable, configured, arranged and/or operable to communicate wirelessly with network nodes and/or another wireless device. Communicating wirelessly may involve transmitting and/or receiving wireless signals using electromagnetic signals, radio waves, infrared signals, and/or other types of signals suitable for conveying information through air. In particular embodiments, wireless devices may be configured to transmit and/or receive information without direct human interaction. For instance, a wireless device may be designed to transmit information to a network on a predetermined schedule, when triggered by an internal or external event, or in response to requests from the network. Generally, a wireless device may represent any device capable of, configured for, arranged for, and/or operable for wireless communication, for example radio communication devices. Examples of wireless devices include, but are not limited to, user equipment (UE) such as smart phones. Further examples include wireless cameras, wireless-enabled tablet computers, laptop-embedded equipment (LEE), laptop-mounted equipment (LME), USB dongles, and/or wireless customer-premises equipment (CPE).

As one specific example, a wireless device may represent a UE configured for communication in accordance with one or more communication standards promulgated by the 3^{rd} Generation Partnership Project (3GPP), such as 3GPP's GSM, UMTS, LTE, NR, and/or 5G standards. As used herein, a "user equipment" or "UE" may not necessarily have a "user" in the sense of a human user who owns and/or operates the relevant device. Instead, a UE may represent a device that is intended for sale to, or operation by, a human user but that may not initially be associated with a specific human user.

The wireless device may support device-to-device (D2D) communication, for example by implementing a 3GPP standard for sidelink communication, and may in this case be referred to as a D2D communication device.

As yet another specific example, in an Internet of Things (IOT) scenario, a wireless device may represent a machine or other device that performs monitoring and/or measurements, and transmits the results of such monitoring and/or measurements to another wireless device and/or a network node. The wireless device may in this case be a machine-to-machine (M2M) device, which may in a 3GPP context be referred to as a machine-type communication (MTC) device. As one particular example, the wireless device may be a UE implementing the 3GPP narrow band internet of things (NB-IoT) standard. Particular examples of such machines or devices are sensors, metering devices such as power meters, industrial machinery, or home or personal appliances, e.g. refrigerators, televisions, personal wearables such as watches etc. In other scenarios, a wireless device may represent a vehicle or other equipment that is capable of monitoring and/or reporting on its operational status or other functions associated with its operation.

A wireless device as described above may represent the endpoint of a wireless connection, in which case the device may be referred to as a wireless terminal. Furthermore, a wireless device as described above may be mobile, in which case it may also be referred to as a mobile device or a mobile terminal.

As depicted in figure 7, WD 70 may be any type of wireless endpoint, mobile station, mobile phone, wireless local loop phone, smartphone, user equipment, desktop computer, PDA, cell phone, tablet, laptop, VoIP phone or handset, vehicle, or other device which is able to wirelessly send and receive data and/or signals to and from a network node, such as network node 740 and/or other WDs. WD 70 comprises processor 72, storage 75, interface 73, and antenna 77. Like network node 740, the components of WD 70 are depicted as single boxes located within a single larger box, however in practice a wireless device may comprises multiple different physical components that make up a single illustrated component (e.g., storage 75 may comprise multiple discrete microchips, each microchip representing a portion of the total storage capacity).

Processor 72 may be a combination of one or more of a microprocessor, controller, microcontroller, central processing unit, digital signal processor, application specific integrated circuit, field programmable gate array, or any other suitable computing device, resource, or combination of hardware, software and/or encoded logic operable to provide, either alone or in combination with other WD 70 components, such as storage 75, WD 70 functionality. Such functionality may include providing various wireless features discussed herein, including any of the features or benefits disclosed herein.

Storage 75 may be any form of volatile or non-volatile memory including, without limitation, persistent storage, solid state memory, remotely mounted memory, magnetic media, optical media, random access memory (RAM), read-only memory (ROM), removable media, or any other suitable local or remote memory component. Storage 75 may store any suitable data, instructions, or information, including software and encoded logic, utilized by WD 70. Storage 75 may be used to store any calculations made by processor 72 and/or any data received via interface 73.

Storage 75 may comprise computer readable means on which a computer program can be stored. The computer program may include instructions which cause processor 72 (and any operatively coupled entities and devices, such as interface 73 and storage 75) to execute methods according to embodiments described herein. The computer program and/or computer program product may thus provide means for performing any steps disclosed herein.

Interface 73 may be used in the wireless communication of signaling and/or data between WD 70 and network node 740. For example, interface 73 may perform any formatting, coding, or translating that may be needed to allow WD 70 to send and receive data from network node 740 over a wireless connection. Interface 73 may also include a radio transmitter and/or receiver that may be coupled to or a part of antenna 77. The radio may receive digital data that is to be sent out to network node 740 via a wireless connection. The radio may convert the digital data into a radio signal having the appropriate channel and bandwidth parameters. The radio signal may then be transmitted via antenna 77 to network node 740.

Antenna 77 may be any type of antenna capable of transmitting and receiving data and/or signals wirelessly. In some embodiments, antenna 77 may comprise one or more omni-directional, sector or panel antennas operable to transmit/receive radio signals between 2 GHz and 66 GHz. For simplicity, antenna 77 may be considered a part of interface 73 to the extent that a wireless signal is being used.

There is provided a wireless device (WD) operative to limit beam measurements comprising processing circuitry and a memory, the memory containing instructions executable by the processing circuitry whereby the WD is operative to obtain configuration parameters for use in evaluating at least a subset of a group of beams; evaluate a criterion, defined based on the configuration parameters, after measuring each beam of the group; and abort measuring each beam of the group when the evaluation criterion is met.

There is provided a wireless device (WD) operative to limit beam measurements, comprising a transceiving module for obtaining configuration parameters for use in evaluating at least a subset of a group of beams; and a processing module for evaluating a criterion, defined based on the configuration parameters, after measuring each beam of the group and for aborting measuring each beam of the group when the evaluation criterion is met.

There is provided a wireless device (WD) 70 operative to limit beam measurements comprising processing circuitry 72 and a memory 75, the memory 75 containing instructions executable by the processing circuitry 72 whereby the WD 70 is operative to select a group of beams and gradually evaluate beams of the group of beams. Gradually evaluate the group of beams includes to: obtain a measurement for at least one beam, compare the measurement for the at least one beam with a criterion, and upon determination that the measurement for the at least one beam fulfills the criterion, abort evaluating further beams of the group of beams, thereby limiting beam measurements by the WD 70.

Wireless device 70 may further perform steps or functions described herein in relation with figures 1 to 6b.

Figure 7 illustrates a wireless network that may be used for wireless communications. The wireless network may include a plurality of wireless devices 70 and a plurality of radio access nodes 720, 740, connected to one or more core network nodes (not illustrated) via a network 710. Wireless devices 70 within a coverage area may each be capable of communicating directly with radio access nodes 720, 740 over a wireless interface. In certain embodiments, wireless devices may also be capable of communicating with each other via device-to-device (D2D) communication. In certain embodiments, radio access nodes 720, 740 may also be capable of communicating with each other, e.g. via an interface (e.g. X2 in LTE).

In some embodiments, an area of wireless signal coverage associated with a radio access node 720, 740 may be referred to as a cell.

A wireless device 70 may be configured to operate in carrier aggregation (CA) implying aggregation of two or more carriers in at least one of Downlink (DL) and Uplinnk (UL) directions. With CA, a wireless device 70 can have multiple serving cells, wherein the term 'serving' herein means that the wireless device 70 is configured with the corresponding serving cell and may receive from and/or transmit data to the network node on the serving cell e.g. on Primary Cell (PCell) or any of the Secondary Cells (SCells). The data is transmitted or received via physical channels e.g. Physical Downlink Shared Channel (PDSCH) in DL, Physical Uplink Shared Channel (PUSCH) in UL etc. A component carrier (CC) also interchangeably called as carrier or aggregated carrier, PCC or SCC is configured at the wireless device 70 by the network node 740 using higher layer signaling e.g. by sending RRC configuration message to the wireless device 70. The configured CC is used by the network node 740 for serving the wireless device 70 on the serving cell (e.g. on PCell, PSCell, SCell etc) of the configured CC. The configured CC is also used by the wireless device 70 for performing one or more radio measurements (e.g. RSRP, RSRQ etc) on the cells operating on the CC e.g. PCell, SCell or PSCell and neighboring cells.

The term SRS used herein may refer to any type of reference signal (RS) or more generally physical radio signals transmitted by the wireless device 70 in the UL to enable the network node 740 to determine the UL signal quality e.g. UL SNR, SINR, etc. Examples of such reference signals are sounding reference signals, DMRS, wireless device specific reference or pilot signals etc. The embodiments are applicable to any type of RS i.e. switching of carrier transmitting any type of RS.

In certain embodiments, radio access nodes 720, 740 may interface with a radio network controller. The radio network controller may control radio access nodes 720, 740 and may provide certain radio resource management functions, mobility management functions, and/or other suitable functions. In certain embodiments, the functions of the radio network controller may be included in radio access node 720, 740. The radio network controller may interface with a core network node (not illustrated). In certain embodiments, the radio network controller may interface with the core network node via an interconnecting network 710.

The interconnecting network 710 may refer to any interconnecting system capable of transmitting audio, video, signals, data, messages, or any combination of the preceding. The interconnecting network 710 may include all or a portion of a public switched telephone network (PSTN), a public or private data network, a local area network (LAN), a metropolitan area network (MAN), a wide area network (WAN), a local, regional, or global communication or computer network such as the Internet, a wireline or wireless network, an enterprise intranet, or any other suitable communication link, including combinations thereof.

In some embodiments, a core network node may manage the establishment of communication sessions and various other functionalities for wireless devices 70. Examples of core network node may include MSC, MME, Serving Gateway (SGW), Packet Gateway (PGW), O&M, OSS, SON, positioning node (e.g. E-SMLC), MDT node, etc. Wireless devices 70 may exchange certain signals with the core network node using the non-access stratum layer. In non-access stratum signaling, signals between wireless devices 70 and the core network node may be transparently passed through the radio access network. In certain embodiments, radio access nodes 720, 740 may interface with one or more network nodes over an internode interface.

The embodiments may be implemented in any appropriate type of telecommunication system supporting any suitable communication standards and using any suitable components, and are applicable to any radio access technology (RAT) or multi-RAT systems in which the wireless device receives and/or transmits signals (e.g., data). While certain embodiments are described for NR, 5G, 4G and/or LTE, the embodiments may be applicable to any RAT, such as Universal Terrestrial Radio Access (UTRA), Evolved Universal Terrestrial Radio Access (E-UTRA), narrow band internet of things (NB-IoT), WiFi, Bluetooth, next generation RAT (NR, NX), 4G, 5G, LTE Frequency Division Duplex (FDD)/ Time Division Duplex (TDD), Wide CDMA (WCDMA)/ High Speed Packet Access (HSPA), GSM/GSM EDGE Radio Access Network (GERAN), WLAN, Code Division Multiplexing Access (CDMA)2000, etc.

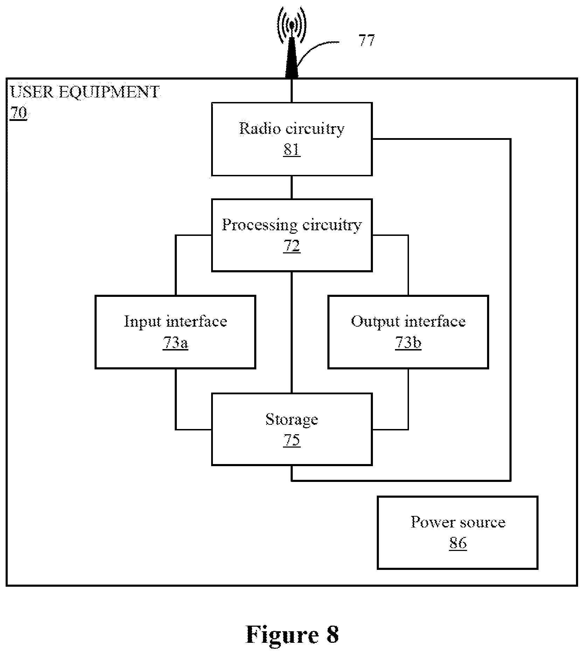

Turning to figure 8, the wireless device 70 may be a user equipment. Wireless device 70 includes an antenna 77, radio front-end circuitry 81, processing circuitry 72, and a computer-readable storage medium 75. Antenna 77 may include one or more antennas or antenna arrays, and is configured to send and/or receive wireless signals, and is connected to radio front-end circuitry 81. In certain alternative embodiments, wireless device 70 may not include antenna 77, and antenna 77 may instead be separate from wireless device 70 and be connectable to wireless device 70 through an interface or port.

The radio front-end circuitry 81 may comprise various filters and amplifiers, is connected to antenna 77 and processing circuitry 72, and is configured to condition signals communicated between antenna 77 and processing circuitry 72. In certain alternative embodiments, wireless device/user equipment 70 may not include radio front-end circuitry 81, and processing circuitry 72 may instead be connected to antenna 77 without radio front-end circuitry 81.

Processing circuitry 72 may include one or more of radio frequency (RF) transceiver circuitry, baseband processing circuitry, and application processing circuitry. In some embodiments, the RF transceiver circuitry, baseband processing circuitry, and application processing circuitry may be on separate chipsets. In alternative embodiments, part or all of the baseband processing circuitry and application processing circuitry may be combined into one chipset, and the RF transceiver circuitry may be on a separate chipset. In still alternative embodiments, part or all of the RF transceiver circuitry and baseband processing circuitry may be on the same chipset, and the application processing circuitry may be on a separate chipset. In yet other alternative embodiments, part or all of the RF transceiver circuitry, baseband processing circuitry, and application processing circuitry may be combined in the same chipset. Processing circuitry 72 may include, for example, one or more central processing units (CPUs), one or more microprocessors, one or more application specific integrated circuits (ASICs), and/or one or more field programmable gate arrays (FPGAs).

In particular embodiments, some or all of the functionality described herein as being provided by a wireless device may be provided by the processing circuitry 72 executing instructions stored on a computer-readable storage medium 75. In alternative embodiments, some or all of the functionality may be provided by the processing circuitry 72 without executing instructions stored on a computer-readable medium, such as in a hard-wired manner. In any of those particular embodiments, whether executing instructions stored on a computer-readable storage medium or not, the processing circuitry can be said to be configured to perform the described functionality. The benefits provided by such functionality are not limited to the processing circuitry 72 alone or to other components of wireless device 70, but are enjoyed by the wireless device as a whole, and/or by end users and the wireless network generally.

Antenna 77, radio front-end circuitry 81, and/or processing circuitry 72 may be configured to perform any receiving operations described herein as being performed by a wireless device. Any information, data and/or signals may be received from a network node and/or another wireless device.

The processing circuitry 72 may be configured to perform any operations described herein as being performed by a wireless device. Operations performed by processing circuitry 72 may include processing information obtained by the processing circuitry 72 by, for example, converting the obtained information into other information, comparing the obtained information or converted information to information stored in the wireless device, and/or performing one or more operations based on the obtained information or converted information, and as a result of the processing making a determination.

Antenna 77, radio front-end circuitry 81, and/or processing circuitry 72 may be configured to perform any transmitting operations described herein as being performed by a wireless device. Any information, data and/or signals may be transmitted to a network node and/or another wireless device.

Computer-readable storage medium 75 is generally operable to store instructions, such as a computer program, software, an application including one or more of logic, rules, code, tables, etc. and/or other instructions capable of being executed by a processor. Examples of computer-readable storage medium 75 include computer memory (for example, Random Access Memory (RAM) or Read Only Memory (ROM)), mass storage media (for example, a hard disk), removable storage media (for example, a Compact Disk (CD) or a Digital Video Disk (DVD)), and/or any other volatile or non-volatile, non-transitory computer-readable and/or computer-executable memory devices that store information, data, and/or instructions that may be used by processing circuitry 72. In some embodiments, processing circuitry 72 and computer-readable storage medium 75 may be considered to be integrated.

There is provided a non-transitory computer readable media having stored thereon instructions for limiting beam measurements by an idle or inactive User Equipment (UE), the instructions comprising obtaining configuration parameters for use in evaluating at least a subset of a group of beams; evaluating a criterion, defined based on the configuration parameters, after measuring each beam of the group; and aborting measuring each beam of the group when the evaluation criterion is met.

There is provided a non-transitory computer readable media having stored thereon instructions for limiting beam measurements by a User Equipment (UE) 70 during an occasion of radio channel quality measurement, the instructions comprising selecting a group of beams and gradually evaluating beams of the group of beams. Gradually evaluating beams includes obtaining a measurement for at least one beam, comparing the measurement for the at least one beam with a criterion, and upon determination that the measurement for the at least one beam fulfills the criterion, aborting evaluating further beams of the group of beams, thereby limiting beam measurements by the UE.

Alternative embodiments of wireless device or UE 70 may include additional components beyond those shown in figure 8 that may be responsible for providing certain aspects of the wireless device's functionality, including any of the functionality described herein and/or any functionality necessary to support the solution described above. As just one example, wireless device 70 may include input interfaces, devices and circuits, and output interfaces, devices and circuits. Input interfaces, devices, and circuits are configured to allow input of information into wireless device 70, and are connected to processing circuitry 72 to allow processing circuitry 72 to process the input information. For example, input interfaces, devices, and circuits may include a microphone, a proximity or other sensor, keys/buttons, a touch display, one or more cameras, a USB port, or other input elements. Output interfaces, devices, and circuits are configured to allow output of information from wireless device 70, and are connected to processing circuitry 72 to allow processing circuitry 72 to output information from wireless device 70. For example, output interfaces, devices, or circuits may include a speaker, a display, vibrating circuitry, a USB port, a headphone interface, or other output elements. Using one or more input and output interfaces, devices, and circuits, wireless device 70 may communicate with end users and/or the wireless network, and allow them to benefit from the functionality described herein.

As another example, wireless device or UE 70 may include power source 86. Power source 86 may comprise power management circuitry. Power source 86 may receive power from a power supply, which may either be comprised in, or be external to, power source 86. For example, wireless device 70 may comprise a power supply in the form of a battery or battery pack which is connected to, or integrated in, power source 86. Other types of power sources, such as photovoltaic devices, may also be used. As a further example, wireless device 70 may be connectable to an external power supply (such as an electricity outlet) via an input circuitry or interface such as an electrical cable, whereby the external power supply supplies power to power source 86. Power source 86 may be connected to radio front-end circuitry 81, processing circuitry 72, and/or computer-readable storage medium 75 and be configured to supply wireless device 70, including processing circuitry 72, with power for performing the functionality described herein.

Wireless device 70 may also include multiple sets of processing circuitry 72, computer-readable storage medium 75, radio circuitry 81, and/or antenna 77 for different wireless technologies integrated into wireless device 70, such as, for example, GSM, WCDMA, LTE, NR, WiFi, or Bluetooth wireless technologies. These wireless technologies may be integrated into the same or different chipsets and other components within wireless device 70.

There is provided a User Equipment (UE) operative to limit beam measurements comprising processing circuitry and a memory, the memory containing instructions executable by the processing circuitry whereby the UE is operative to obtain configuration parameters for use in evaluating at least a subset of a group of beams; evaluate a criterion, defined based on the configuration parameters, after measuring each beam of the group; and abort measuring each beam of the group when the evaluation criterion is met.

There is provided a User Equipment (UE) 70 operative to limit beam measurements comprising processing circuitry 72 and a memory 75, the memory 75 containing instructions executable by the processing circuitry 72 whereby the UE 70 is operative to select a group of beams and gradually evaluate beams of the group of beams. Gradually evaluate the group of beams includes to: obtain a measurement for at least one beam, compare the measurement for the at least one beam with a criterion, and upon determination that the measurement for the at least one beam fulfills the criterion, abort evaluating further beams of the group of beams, thereby limiting beam measurements by the UE 70.

The UE 70 may further be operative to open a measurement window and to close the measurement window after aborting evaluating further beams.

The UE 70 may further be operative to close the measurement window during periods without beam transmissions.

The UE 70 may be in RRC_IDLE state or RRC_INACTIVE state and the occasion of radio channel quality measurement may be an occasion of intra-cell Radio Resource Management (RRM) measurement.

The UE 70 may further be operative to select the group of beams based on a default selection of beams for use for a first occasion of radio channel quality measurement or to select a complete beam sweep.

The UE 70 may further be operative to select the group of beams based on prior knowledge of at least one beam previously determined as fulfilling the criterion and the UE may further be operative to use the prior knowledge for selecting the group of beams by selecting a target subset of beams.

The UE 70 may further be operative to select a single Synchronization Signal (SS) Block, an SS Burst, an SS Burst Set or a subset of consecutive transmissions of Synchronization Signals, SS Blocks, SS Bursts or SS Burst Sets.

The UE 70 may further be operative to measure any one of a Reference Signal Received Power (RSRP), a Reference Signal Received Quality (RSRQ), a Signal to Noise Ratio (SNR) or a Signal to Interference and Noise Ratio (SINR) of any one of, or of any combination of, Synchronization Signal (SS) including: a Primary Synchronization Signal (SS) (PSS), a Secondary Synchronization Signal (SSS), a Tertiary Synchronization Signal (TSS), a Channel State Information (CSI) Reference Signal (RS) (CSI-RS) or a Demodulation Reference Signal (DMRS).

The UE 70 may further be operative to compare the measurement for the at least one beam with a selection threshold and to determine that the measurement for the at least one beam is greater than or equal to the selection threshold.

The selection threshold may be a Synchronization Signal (SS) selection threshold and the SS selection threshold may be configured by the network and may be obtained by the UE or may be derived by the UE based on a parameter configured by the network.

The SS selection threshold may comprise a set of values configured for individual SS Blocks depending on Random Access Channel (RACH) configurations, a set of values configured for each SS Burst or a common value configured for all Downlink (DL) SS Blocks.

Any appropriate steps, methods, or functions described herein may also be performed through one or more functional modules. Each module can contain sub modules as would be apparent to a person skilled in the art. For example, a transceiving module may comprise a sending module and a receiving module.

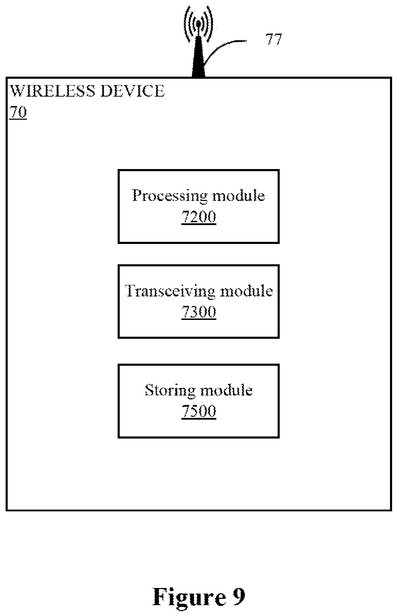

Referring to figure 9, the wireless device 70 may comprise an antenna 77, a processing module 7200, a transceiving module 7300 and a storing module 7500 that may perform steps or functions described herein in relation with some embodiments.

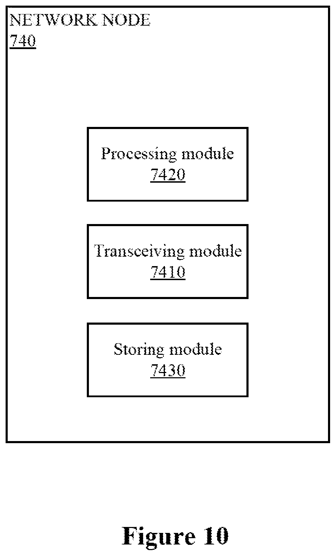

Referring to figure 10, the network node 740 may comprise a processing module 7420, a transceiving module 7410 and a storing module 7430 that may perform steps or functions described herein in relation with some embodiments.

Each functional module may comprise software, computer programs, sub-routines, libraries, source code, or any other form of executable instructions that are executed by, for example, a processor. In some embodiments, each functional module may be implemented in hardware and/or in software. For example, one or more or all functional modules may be implemented by processors 72 and/or 742, possibly in cooperation with storage 75 and/or 743. Processors 72 and/or 742 and storage 75 and/or 743 may thus be arranged to allow processors 72 and/or 742 to fetch instructions from storage 75 and/or 743 and execute the fetched instructions to allow the respective functional module to perform any steps or functions disclosed herein.

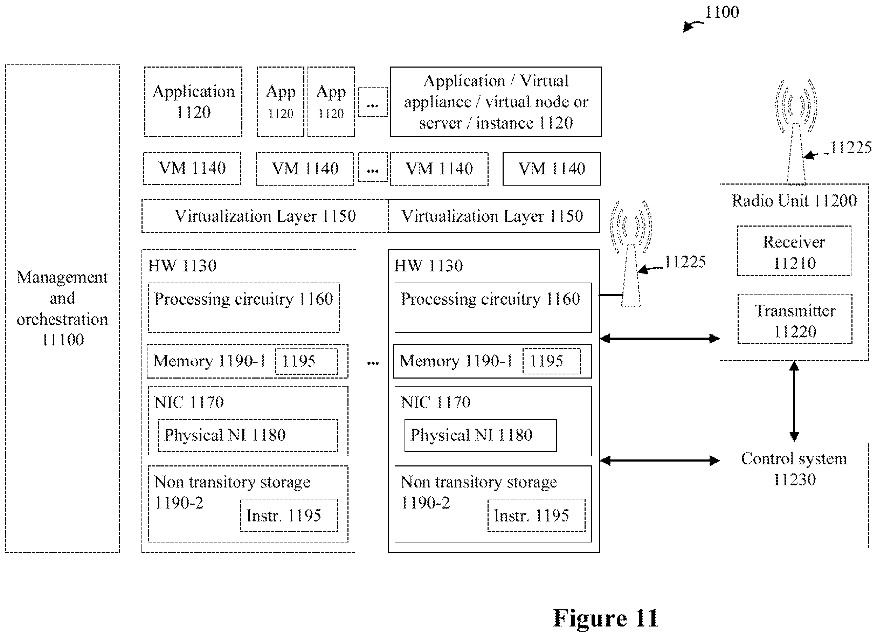

Figure 11 is a schematic block diagram illustrating a virtualization environment 1100 in which functions implemented by some embodiment(s) may be virtualized. As used herein, virtualization can be applied to a node (e.g., a virtualized base station or a virtualized radio access node) or to a device (e.g. user device or any type of wireless communication device) and relates to an implementation in which at least a portion of the functionality is implemented as a virtual component(s) (e.g., via application(s)/component(s)/function(s) or virtual machine(s) executing on a physical processing node(s) in a network(s)).

In some embodiments, some of the functions described herein may be implemented as virtual components executed by one or more virtual machines implemented in a virtual environment(s) hosted by the hardware node(s) 1130.

The functions may be implemented by an application 1120 (which may alternatively be called a software instance, a virtual appliance, a network function, a virtual node, or a virtual network function) operative to implement steps of some method(s) according to some embodiment(s). The application 1120 runs in a virtualization environment 1100 which provides hardware 1130 comprising processing circuitry 1160 and memory 1190. The memory contains instructions 1195 executable by the processing circuitry 1160 whereby the application 1120 is operative to execute the method(s) or steps of the method(s) previously described in relation with some embodiments), namely in relation with figures 1 to 6b.

The virtualization environment 1100, comprises a general-purpose or special-purpose network hardware device(s) 1130 comprising a set of one or more processor(s) or processing circuitry 1160, which may be commercial off-the-shelf (COTS) processors, dedicated Application Specific Integrated Circuits (ASICs), or any other type of processing circuitry including digital or analog hardware components or special purpose processors. The hardware device(s) comprises a memory 1190-1 which may be a transitory memory for storing instructions 1195 or software executed by the processing circuitry 1160. The hardware device(s) comprise network interface controller(s) 1170 (NICs), also known as network interface cards, which include physical Network Interface 1180. The hardware device(s) also includes non-transitory machine readable storage media 1190-2 having stored therein software 1195 and/or instruction executable by the processing circuitry 1160. Software 1195 may include any type of software including software for instantiating the virtualization layer or hypervisor, software to execute virtual machines 1140 as well as software allowing to execute functions described in relation with some embodiment(s) described previously.

Virtual machines or containers 1140, implement virtual processing, virtual memory, virtual networking or interface and virtual storage, and may be run by the virtualization layer or hypervisor 1150. Different embodiments of the instance or virtual appliance 1120 may be implemented on one or more of the virtual machine(s) 1140, and the implementations may be made in different ways.

During operation, the processing circuitry 1160 executes software 1195 to instantiate the hypervisor or virtualization layer, which may sometimes be referred to as a virtual machine monitor (VMM). The hypervisor 1150 may present a virtual operating platform that appears like networking hardware to virtual machine 1140. As shown in the figure 11, hardware 1130 may be a standalone network node, with generic or specific hardware. Hardware 1130 may comprise an antenna 11225 and may implement some functions via virtualization. Alternatively, hardware 1130 may be part of a larger cluster of hardware (e.g. such as in a data center or customer premise equipment (CPE)) where many hardware nodes work together and are managed via management and orchestration (MANO) 11100, which, among others, oversees lifecycle management of applications 1120.

Virtualization of the hardware is in some contexts referred to as network function virtualization (NFV). NFV may be used to consolidate many network equipment types onto industry standard high volume server hardware, physical switches, and physical storage, which can be located in data centers, and customer premise equipment.

In the context of NFV, a virtual machine or container 1140 is a software implementation of a physical machine that runs programs as if they were executing on a physical, non-virtualized machine. Each of the virtual machines 1140, and that part of the hardware 1130 that executes that virtual machine, be it hardware dedicated to that virtual machine and/or time slices of hardware temporally shared by that virtual machine with others of the virtual machine(s) 1140, forms a separate virtual network element(s) (VNE).

Still in the context of NFV, Virtual Network Function (VNF) is responsible for handling specific network functions that run in one or more virtual machines on top of the hardware networking infrastructure and corresponds to application 1120 in figure 11.

In some embodiments, one or more radio units 11200 that each includes one or more transmitters 11220 and one or more receivers 11210 may be coupled to one or more antennas 11225. The radio units 11200 may communicate directly with hardware node(s) 1130 via an appropriate network interface(s) and may be used in combination with the virtual components to provide a virtual node with radio capabilities, such as a radio access node or a base station.

In some embodiments, some signaling can be effected with the use of a control system 11230 which may alternatively be used for communication between the hardware node(s) 1130 and the radio unit(s) 11200.

Modifications and other embodiments will come to mind to one skilled in the art having the benefit of the teachings presented in the foregoing description and the associated drawings. The described embodiments are merely illustrative and should not be considered restrictive in any way. The scope sought is given by the appended claims, rather than the preceding description, and all variations and equivalents that fall within the range of the claims are intended to be embraced therein. Although specific terms may be employed herein, they are used in a generic and descriptive sense only and not for purposes of limitation.

## Claims

1. A method for limiting beam measurements by a User Equipment, UE (70), during an occasion of radio channel quality measurement, comprising:
- selecting (601) a group of beams; and
- gradually evaluating (603) beams of the group of beams, including:
• obtaining (604) a measurement for at least one beam,
• comparing (605) the measurement for the at least one beam with a criterion, and
• upon determination (606) that the measurement for the at least one beam fulfills the criterion, aborting evaluating further beams of the group of beams, thereby limiting beam measurements by the UE,
the method **characterised in that** the UE is in RRC_IDLE state or RRC_INACTIVE state and the occasion of radio channel quality measurement is an occasion of intra-cell Radio Resource Management, RRM, measurement.

2. The method of claim 1, further comprising, previous to gradually evaluating, opening a measurement window, and wherein aborting evaluating further comprises closing the measurement window and/or
the method further comprising closing the measurement window during periods without beam transmissions.

3. The method of claim 1 or 2, wherein selecting comprises selecting the group of beams based on a default Synchronization Signal, SS, target selection criterion of beams for use for a first occasion of radio channel quality measurement or selecting a complete beam sweep, wherein the default SS target selection criterion is one of standardized, stored in a Universal Subscriber Identity Module, USIM, or provided via a System Information, SI.

4. The method of any one of claims 1 to 3, wherein selecting comprises selecting the group of beams based on prior knowledge of at least one beam previously determined as fulfilling the criterion and wherein the prior knowledge is used for selecting the group of beams by selecting a target subset of beams and/or
wherein selecting comprises selecting a single Synchronization Signal, SS, Block, an SS Burst, an SS Burst Set or a subset of consecutive transmissions of Synchronization Signals, SS Blocks, SS Bursts or SS Burst Sets.

5. The method of any one of claims 1 to 4, wherein obtaining comprises measuring any one of a Reference Signal Received Power, RSRP, a Reference Signal Received Quality, RSRQ, a Signal to Noise Ratio, SNR, or a Signal to Interference and Noise Ratio, SINR, of any one of, or of any combination of, Synchronization Signal, SS, including: a Primary Synchronization Signal, SS, PSS, a Secondary Synchronization Signal, SSS, a Tertiary Synchronization Signal, TSS, a Channel State Information, CSI, Reference Signal, RS, CSI-RS, or a Demodulation Reference Signal, DMRS.

6. The method of any one of claims 1 to 5, wherein comparing comprises comparing the measurement for the at least one beam with a selection threshold and wherein the determination that the measurement for the at least one beam fulfills the criterion, comprises determining that the measurement for the at least one beam is greater than or equal to the selection threshold.

7. The method of claim 6, wherein the selection threshold is a Synchronization Signal, SS, selection threshold and wherein the SS selection threshold is configured by the network and is obtained by the UE or is derived by the UE based on a parameter configured by the network and, optionally,
wherein the SS selection threshold comprises a set of values configured for individual SS Blocks depending on Random Access Channel, RACH, configurations, a set of values configured for each SS Burst or a common value configured for all Downlink, DL, SS Blocks.

8. A User Equipment, UE (70), operative to limit beam measurements comprising processing circuitry (72) and a memory (75), the memory containing instructions executable by the processing circuitry upon which the UE is operative to:
- select (601) a group of beams; and
- gradually evaluate (603) beams of the group of beams, including to:
• obtain (604) a measurement for at least one beam,
• compare (605) the measurement for the at least one beam with a criterion, and
• upon determination (606) that the measurement for the at least one beam fulfills the criterion, abort evaluating further beams of the group of beams, thereby limiting beam measurements by the UE, the UE **characterised in that**
the UE is in RRC_IDLE state or RRC_INACTIVE state and the occasion of radio channel quality measurement is an occasion of intra-cell Radio Resource Management, RRM, measurement.

9. The UE of claim 8, further operative to open a measurement window and to close the measurement window after aborting evaluating further beams.

10. The UE of claim 8 or 9, further operative to close the measurement window during periods without beam transmissions.

11. The UE of any one of claims 8 to 10, wherein the UE is further operative to select the group of beams based on a default Synchronization Signal, SS, target selection criterion of beams for use for a first occasion of radio channel quality measurement or to select a complete beam sweep, wherein the default SS target selection criterion is one of standardized, stored in a Universal Subscriber Identity Module, USIM, or provided via a System Information, SI.

12. The UE of any one of claims 8 to 11, wherein the UE is further operative to select the group of beams based on prior knowledge of at least one beam previously determined as fulfilling the criterion and wherein the UE is further operative to use the prior knowledge for selecting the group of beams by selecting a target subset of beams and/or
wherein the UE is further operative to select a single Synchronization Signal, SS, Block, an SS Burst, an SS Burst Set or a subset of consecutive transmissions of Synchronization Signals, SS Blocks, SS Bursts or SS Burst Sets.

13. The UE of any one of claims 8 to 12, wherein the UE is further operative to measure any one of a Reference Signal Received Power, RSRP, a Reference Signal Received Quality, RSRQ, a Signal to Noise Ratio, SNR, or a Signal to Interference and Noise Ratio, SINR, of any one of, or of any combination of, Synchronization Signal, SS, including: a Primary Synchronization Signal, SS, PSS, a Secondary Synchronization Signal, SSS, a Tertiary Synchronization Signal, TSS, a Channel State Information, CSI, Reference Signal, RS, CSI-RS, or a Demodulation Reference Signal, DMRS.

14. The UE of any one of claims 8 to 13, wherein the UE is further operative to compare the measurement for the at least one beam with a selection threshold and to determine that the measurement for the at least one beam is greater than or equal to the selection threshold.

15. The UE of claim 14, wherein the selection threshold is a Synchronization Signal, SS, selection threshold and wherein the SS selection threshold is configured by the network and is obtained by the UE or is derived by the UE based on a parameter configured by the network and, optionally,
wherein the SS selection threshold comprises a set of values configured for individual SS Blocks depending on Random Access Channel, RACH, configurations, a set of values configured for each SS Burst or a common value configured for all Downlink, DL, SS Blocks.

## Patentansprüche

1. Verfahren zur Begrenzung von Strahlmessungen durch eine Benutzereinrichtung, UE, (70) während einer Funkkanalqualitätsmessgelegenheit, umfassend:
- Auswählen (601) einer Gruppe von Strahlen; und
- schrittweises Beurteilen (603) von Strahlen der Gruppe von Strahlen, aufweisend:
• Erhalten (604) einer Messung für mindestens einen Strahl,
• Vergleichen (605) der Messung für den mindestens einen Strahl mit einem Kriterium, und
• Abbrechen des Beurteilens weiterer Strahlen der Gruppe von Strahlen bei Bestimmung (606), dass die Messung für den mindestens einen Strahl das Kriterium erfüllt, um dadurch Strahlmessungen durch die UE zu begrenzen,
wobei das Verfahren **dadurch gekennzeichnet ist, dass** die UE in einem RRC_IDLE-Zustand oder einem RRC_INACTIVE-Zustand ist, und die Funkkanalqualitätsmessgelegenheit eine Intrazellen-Funkressourcenverwaltungs-,RRM-,Messgelegenheit ist.

2. Verfahren nach Anspruch 1, ferner umfassend ein Öffnen eines Messfensters vor dem schrittweisen Beurteilen, und wobei das Abbrechen des Beurteilens ferner ein Schließen des Messfensters umfasst, und/oder das Verfahren ferner ein Schließen des Messfensters in Perioden ohne Strahlübertragungen umfasst.

3. Verfahren nach Anspruch 1 oder 2, wobei das Auswählen ein Auswählen der Gruppe von Strahlen basierend auf einem vorgegebenen Synchronisationssignal-,SS-,Zielauswahlkriterium von Strahlen zur Verwendung für eine erste Funkkanalqualitätsmessgelegenheit oder Auswählen einer vollständigen Strahlschwenkung umfasst, wobei das vorgegebene SS-Zielauswahlkriterium eines von einem standardisierten, das in einem universellen Teilnehmerkennungsmodul, USIM, gespeichert ist, oder einem ist, das mittels einer Systeminformation, SI, bereitgestellt wird.

4. Verfahren nach einem der Ansprüche 1 bis 3, wobei das Auswählen ein Auswählen der Gruppe von Strahlen basierend auf einer Vorkenntnis mindestens eines Strahls umfasst, von dem zuvor bestimmt wurde, dass er das Kriterium erfüllt, und wobei die Vorkenntnis zum Auswählen der Gruppe von Strahlen durch Auswählen einer Zielteilmenge von Strahlen verwendet wird, und/oder
wobei das Auswählen ein Auswählen eines einzelnen Synchronisationssignal-,SS-,Blocks, eines SS-Bursts, eines SS-Burstsatzes oder einer Teilmenge von aufeinanderfolgenden Übertragungen von Synchronisationssignal-,SS-,Blöcken, SS-Bursts oder SS-Burstsätzen umfasst.

5. Verfahren nach einem der Ansprüche 1 bis 4, wobei das Erhalten ein Messen eines von einer Referenzsignalempfangsleistung, RSRP, einer Referenzsignalempfangsqualität, RSRQ, einem Signal-Rausch-Verhältnis, SNR, oder einem Signal-zu-Interferenz-und-Rausch-Verhältnis, SINR, eines oder mehrerer oder einer Kombination von Synchronisationssignalen, SS, umfasst, die aufweisen: ein primäres Synchronisationssignal, SS, PSS, ein sekundäres Synchronisationssignal, SSS, ein tertiäres Synchronisationssignal, TSS, ein Kanalzustandsinformations-,CSI-,Referenzsignal, RS, CSI-RS, oder ein Demodulationsreferenzsignal, DMRS.

6. Verfahren nach einem der Ansprüche 1 bis 5, wobei das Vergleichen ein Vergleichen der Messung für den mindestens einen Strahl mit einer Auswahlschwelle umfasst, und wobei die Bestimmung, dass die Messung für den mindestens einen Strahl das Kriterium erfüllt, ein Bestimmen umfasst, dass die Messung für den mindestens einen Strahl größer als oder gleich wie die Auswahlschwelle ist.

7. Verfahren nach Anspruch 6, wobei die Auswahlschwelle eine Synchronisationssignal-,SS-,Auswahlschwelle ist, und wobei die SS-Auswahlschwelle vom Netzwerk konfiguriert und von der UE abgerufen oder von der UE basierend auf einem vom Netzwerk konfigurierten Parameter abgeleitet wird, und optional wobei die SS-Auswahlschwelle einen Satz von Werten, der für einzelne SS-Blöcke in Abhängigkeit von Direktzugriffskanal-,RACH-,Konfigurationen konfiguriert ist, einen Satz von Werten, der für jeden SS-Burst konfiguriert ist, oder einen gemeinsamen Wert umfasst, der für alle Downlink-,DL-,SS-Blöcke konfiguriert ist.

8. Benutzereinrichtung, UE, (70) die zum Begrenzen von Strahlmessungen ausgelegt ist und Verarbeitungsschaltungsanordnung (72) und einen Speicher (75) umfasst, wobei der Speicher Anweisungen enthält, die von der Verarbeitungsschaltungsanordnung ausgeführt werden können, woraufhin die UE ausgelegt ist zum:
- Auswählen (601) einer Gruppe von Strahlen; und
- schrittweisen Beurteilen (603) von Strahlen der Gruppe von Strahlen, dabei zum:
• Erhalten (604) einer Messung für mindestens einen Strahl,
• Vergleichen (605) der Messung für den mindestens einen Strahl mit einem Kriterium, und
• Abbrechen des Beurteilens weiterer Strahlen der Gruppe von Strahlen bei Bestimmung (606), dass die Messung für den mindestens einen Strahl das Kriterium erfüllt, um dadurch Strahlmessungen durch die UE zu begrenzen,
wobei die UE **dadurch gekennzeichnet ist, dass** die UE in einem RRC _IDLE-Zustand oder einem RRC_INACTIVE-Zustand ist, und die Funkkanalqualitätsmessgelegenheit eine Intrazellen-Funkressourcenverwaltungs-,RRM-,Messgelegenheit ist.

9. UE nach Anspruch 8, ferner ausgelegt zum Öffnen eines Messfensters und zum Schließen des Messfensters nach Abbrechen des Beurteilens weiterer Strahlen.

10. UE nach Anspruch 8 oder 9, ferner ausgelegt zum Schließen des Messfensters in Perioden ohne Strahlübertragungen.

11. UE Anspruch 8 oder 10, wobei die UE ferner zum Auswählen der Gruppe von Strahlen basierend auf einem vorgegebenen Synchronisationssignal-,SS-,Zielauswahlkriterium von Strahlen zur Verwendung für eine erste Funkkanalqualitätsmessgelegenheit oder zum Auswählen einer vollständigen Strahlschwenkung ausgelegt ist, wobei das vorgegebene SS-Zielauswahlkriterium eines von einem standardisierten, das in einem universellen Teilnehmerkennungsmodul, USIM, gespeichert ist, oder einem ist, das mittels einer Systeminformation, SI, bereitgestellt wird.

12. UE nach einem der Ansprüche 8 bis 11, wobei die UE ferner zum Auswählen der Gruppe von Strahlen basierend auf einer Vorkenntnis mindestens eines Strahls ausgelegt ist, von dem zuvor bestimmt wurde, dass er das Kriterium erfüllt, und wobei die UE ferner zum Verwenden der Vorkenntnis zum Auswählen der Gruppe von Strahlen durch Auswählen einer Zielteilmenge von Strahlen ausgelegt ist, und/oder
wobei die UE ferner zum Auswählen eines einzelnen Synchronisationssignal-,SS-,Blocks, eines SS-Bursts, eines SS-Burstsatzes oder einer Teilmenge von aufeinanderfolgenden Übertragungen von Synchronisationssignal-,SS-,Blöcken, SS-Bursts oder SS-Burstsätzen ausgelegt ist.

13. UE nach einem der Ansprüche 8 bis 12, wobei die UE ferner zum Messen eines von einer Referenzsignalempfangsleistung, RSRP, einer Referenzsignalempfangsqualität, RSRQ, einem Signal-Rausch-Verhältnis, SNR, oder einem Signal-zu-Interferenz- und Rausch-Verhältnis, SINR, eines oder mehrerer oder einer Kombination von Synchronisationssignalen, SS, ausgelegt ist, die aufweisen: ein primäres Synchronisationssignal, SS, PSS, ein sekundäres Synchronisationssignal, SSS, ein tertiäres Synchronisationssignal, TSS, ein Kanalzustandsinformations-,CSI-,Referenzsignal, RS, CSI-RS, oder ein Demodulationsreferenzsignal, DMRS.

14. UE nach einem der Ansprüche 8 bis 13, wobei die UE ferner zum Vergleichen der Messung für den mindestens einen Strahl mit einer Auswahlschwelle und zum Bestimmen ausgelegt ist, dass die Messung für den mindestens einen Strahl größer als oder gleich wie die Auswahlschwelle ist.

15. UE nach Anspruch 14, wobei die Auswahlschwelle eine Synchronisationssignal-,SS-,Auswahlschwelle ist, und wobei die SS-Auswahlschwelle vom Netzwerk konfiguriert und von der UE abgerufen oder von der UE basierend auf einem vom Netzwerk konfigurierten Parameter abgeleitet wird, und optional
wobei die SS-Auswahlschwelle einen Satz von Werten, der für einzelne SS-Blöcke in Abhängigkeit von Direktzugriffskanal-,RACH-,Konfigurationen konfiguriert ist, einen Satz von Werten, der für jeden SS-Burst konfiguriert ist, oder einen gemeinsamen Wert umfasst, der für alle Downlink-,DL-,SS-Blöcke konfiguriert ist.

## Revendications

1. Procédé de limitation de mesures de faisceau par un équipement utilisateur, UE (70), au cours d'une occasion de mesure de qualité de canal radio, comprenant :
- la sélection (601) d'un groupe de faisceaux ; et
- l'évaluation progressive (603) de faisceaux du groupe de faisceaux, incluant :
• l'obtention (604) d'une mesure pour au moins un faisceau,
• la comparaison (605) de la mesure pour l'au moins un faisceau à un critère, et
• à la détermination (606) que la mesure pour l'au moins un faisceau remplit le critère, l'abandon de l'évaluation d'autres faisceaux du groupe de faisceaux, en limitant de ce fait des mesures de faisceau par l'UE,
le procédé étant **caractérisé en ce que** l'UE est dans l'état RRC_IDLE ou RRC _INACTIVE et l'occasion de mesure de qualité de canal radio est une occasion de mesure de gestion de ressource radio, RRM, intracellulaire.

2. Procédé selon la revendication 1, comprenant en outre, avant l'évaluation progressive, l'ouverture d'une fenêtre de mesure, et dans lequel l'abandon de l'évaluation comprend en outre la fermeture de la fenêtre de mesure, et/ou
le procédé comprenant en outre la fermeture de la fenêtre de mesure au cours de périodes sans transmission de faisceau.

3. Procédé selon la revendication 1 ou 2, dans lequel la sélection comprend la sélection du groupe de faisceaux sur la base d'un critère de sélection cible de signal de synchronisation, SS, par défaut de faisceaux à utiliser pour une première occasion de mesure de qualité de canal radio ou la sélection d'un balayage de faisceau complet, dans lequel le critère de sélection cible SS par défaut est l'un parmi : standardisé, stocké dans un module d'identité d'abonné universel, USIM, ou fourni via une information de système, SI.

4. Procédé selon l'une quelconque des revendications 1 à 3, dans lequel la sélection comprend la sélection du groupe de faisceaux sur la base d'une connaissance antérieure d'au moins un faisceau préalablement déterminé comme remplissant le critère et dans lequel la connaissance antérieure est utilisée pour sélectionner le groupe de faisceaux en sélectionnant un sous-ensemble cible de faisceaux, et/ou dans lequel la sélection comprend la sélection d'un bloc de signaux de synchronisation, SS, unique, d'une salve SS, d'un ensemble de salves SS ou d'un sous-ensemble de transmissions consécutives de blocs de signaux de synchronisation, SS, de salves SS ou d'ensembles de salves SS.

5. Procédé selon l'une quelconque des revendications 1 à 4, dans lequel l'obtention comprend :
la mesure de l'un quelconque parmi : une puissance de réception de signal de référence, RSRP, une qualité de réception de signal de référence, RSRQ, un rapport de signal sur bruit, SNR, ou un rapport de signal sur interférence plus bruit, SINR, de l'un quelconque ou de toute combinaison de signaux de synchronisation, SS, incluant : un signal de synchronisation, SS, primaire, PSS, un signal de synchronisation secondaire, SSS, un signal de synchronisation tertiaire, TSS, un signal de référence, RS, d'information d'état de canal, CSI, CSI-RS, ou un signal de référence de démodulation, DMRS.

6. Procédé selon l'une quelconque des revendications 1 à 5, dans lequel la comparaison comprend la comparaison de la mesure pour l'au moins un faisceau à un seuil de sélection et dans lequel la détermination que la mesure pour l'au moins un faisceau remplit le critère, comprend la détermination que la mesure pour l'au moins un faisceau est supérieure ou égale au seuil de sélection.

7. Procédé selon la revendication 6, dans lequel le seuil de sélection est un seuil de sélection de signal de synchronisation, SS, et dans lequel le seuil de sélection SS est configuré par le réseau et est obtenu par l'UE ou est dérivé par l'UE sur la base d'un paramètre configuré par le réseau et, facultativement, dans lequel le seuil de sélection SS comprend un ensemble de valeurs configurées pour des blocs SS individuels en fonction de configurations de canal d'accès aléatoire, RACH, un ensemble de valeurs configurées pour chaque salve SS ou une valeur commune configurée pour tous les blocs SS de liaison descendante, DL.

8. Equipement utilisateur, UE (70), opérationnel pour limiter des mesures de faisceau comprenant une circuiterie de traitement (72) et une mémoire (75), la mémoire contenant des instructions exécutables par la circuiterie de traitement pour amener l'UE à :
- sélectionner (601) un groupe de faisceaux ; et
- évaluer progressivement (603) des faisceaux du groupe de faisceaux, incluant :
• obtenir (604) une mesure pour au moins un faisceau,
• comparer (605) la mesure pour l'au moins un faisceau à un critère, et
• à la détermination (606) que la mesure pour l'au moins un faisceau remplit le critère, abandonner l'évaluation d'autres faisceaux du groupe de faisceaux, en limitant de ce fait des mesures de faisceau par l'UE,
l'UE étant **caractérisé en ce que** l'UE est dans l'état RRC_IDLE ou RRC_INACTIVE et l'occasion de mesure de qualité de canal radio est une occasion de mesure de gestion de ressource radio, RRM, intracellulaire.

9. UE selon la revendication 8, opérationnel en outre pour ouvrir une fenêtre de mesure et pour fermer la fenêtre de mesure après l'abandon de l'évaluation d'autres faisceaux.

10. UE selon la revendication 8 ou 9, opérationnel en outre pour fermer la fenêtre de mesure au cours de périodes sans transmission de faisceau.

11. UE selon l'une quelconque des revendications 8 à 10, dans lequel l'UE est en outre opérationnel pour sélectionner le groupe de faisceaux sur la base d'un critère de sélection cible de signal de synchronisation, SS, par défaut de faisceaux à utiliser pour une première occasion de mesure de qualité de canal radio ou pour sélectionner un balayage de faisceau complet, dans lequel le critère de sélection cible SS par défaut est l'un parmi : standardisé, stocké dans un module d'identité d'abonné universel, USIM, ou fourni via une information de système, SI.

12. UE selon l'une quelconque des revendications 8 à 11, dans lequel l'UE est en outre opérationnel pour sélectionner le groupe de faisceaux sur la base d'une connaissance antérieure d'au moins un faisceau préalablement déterminé comme remplissant le critère et dans lequel l'UE est en outre opérationnel pour utiliser la connaissance antérieure pour sélectionner le groupe de faisceaux en sélectionnant un sous-ensemble cible de faisceaux, et/ou
dans lequel l'UE est en outre opérationnel pour sélectionner un bloc de signaux de synchronisation, SS, unique, une salve SS, un ensemble de salves SS ou un sous-ensemble de transmissions consécutives de blocs de signaux de synchronisation, SS, de salves SS ou d'ensembles de salves SS.

13. UE selon l'une quelconque des revendications 8 à 12, dans lequel l'UE est en outre opérationnel pour mesurer l'un quelconque parmi : une puissance de réception de signal de référence, RSRP, une qualité de réception de signal de référence, RSRQ, un rapport de signal sur bruit, SNR, ou un rapport de signal sur interférence plus bruit, SINR, de l'un quelconque ou de toute combinaison de signaux de synchronisation, SS, incluant : un signal de synchronisation, SS, primaire, PSS, un signal de synchronisation secondaire, SSS, un signal de synchronisation tertiaire, TSS, un signal de référence, RS, d'information d'état de canal, CSI, CSI-RS, ou un signal de référence de démodulation, DMRS.

14. UE selon l'une quelconque des revendications 8 à 13, dans lequel l'UE est en outre opérationnel pour comparer la mesure pour l'au moins un faisceau à un seuil de sélection et pour déterminer que la mesure pour l'au moins un faisceau est supérieure ou égale au seuil de sélection.

15. UE selon la revendication 14, dans lequel le seuil de sélection est un seuil de sélection de signal de synchronisation, SS, et dans lequel le seuil de sélection SS est configuré par le réseau et est obtenu par l'UE ou est dérivé par l'UE sur la base d'un paramètre configuré par le réseau et, facultativement, dans lequel le seuil de sélection SS comprend un ensemble de valeurs configurées pour des blocs SS individuels en fonction de configurations de canal d'accès aléatoire, RACH, un ensemble de valeurs configurées pour chaque salve SS ou une valeur commune configurée pour tous les blocs SS de liaison descendante, DL.
